# EUROPÄISCHE PATENTSCHRIFT

(11) **EP 2 841 814 B1**
(45) Veröffentlichungstag und Bekanntmachung des Hinweises auf die Patenterteilung: **28.12.2016**
(21) Anmeldenummer: 13712168.7
(22) Anmeldetag: 13.03.2013
(51) Int. Cl.: F16H 3/66, F16H 37/04, B60K 6/48

(54) **LASTSCHALTBARES MEHRSTUFENGETRIEBE**
MULTI-STAGE POWER-SHIFT TRANSMISSION
BOÎTE DE VITESSES À RAPPORTS MULTIPLES COUPLABLE SOUS CHARGE

(30) Priorität: 27.04.2012 DE 102012207028
(43) Veröffentlichungstag der Anmeldung: 04.03.2015
(73) Patentinhaber: ZF Friedrichshafen AG, 88046 Friedrichshafen (DE)
(72) Erfinder: BECK, Stefan, 88097 Eriskirch (DE)
(86) Internationale Anmeldenummer: PCT/EP2013/055065
(87) Internationale Veröffentlichungsnummer: WO 2013/159995

(56) Entgegenhaltungen:
- DE-A1- 10 115 985
- DE-A1-102009 018 958
- DE-A1-102010 019 649
- US-A1- 2010 035 718
- US-A1- 2012 088 627
- US-A1- 2012 094 799

## Beschreibung

Die vorliegende Erfindung bezieht sich auf ein lastschaltbares Mehrstufengetriebe in Planetenbauweise für ein Fahrzeug, das beispielsweise als ein Automatgetriebe verwendet werden kann.

Lastschaltbare Mehrstufengetriebe finden eine Anwendung als Fahrgetriebe in Antriebssträngen von Fahrzeugen. Solche Mehrstufengetriebe weisen mehrere Getriebestufen und mehrere Schaltelemente auf. Sie finden sich in Ausführungen für Personenkraftwagen mit bis zu acht Vorwärtsgängen für Frontquereinbau oder für Längseinbau. Zur Erzeugung der Getriebeübersetzungen gibt es lastschaltbare Mehrstufengetriebe mit Stirnradstufen und mit Planetenradstufen. Bei Mehrstufengetrieben mit Planetenradstufen handelt es sich meist um Automatgetriebe, welche mittels Reibungselementen beziehungsweise Schaltelementen, wie etwa Kupplungen und Bremsen, geschaltet werden. Üblicherweise sind derartige Mehrstufengetriebe mit einem Anfahrelement, wie etwa einem hydrodynamischen Drehmomentwandler oder einer Strömungskupplung, verbunden. Ein solches Anfahrelement unterliegt einer Schlupfwirkung und ist wahlweise mit einer Überbrückungskupplung versehen. Die bekannten Getriebekonzepte weisen spezifische Vorteile und spezifische Nachteile auf, sodass diese nur für bestimmte Anwendungsfälle interessant sind.

Die Patentschrift US 7,819, 772 B2 offenbart ein lastschaltbares Mehrstufengetriebe zwischen einer Antriebswelle und einer Abtriebswelle. Das Mehrstufengetriebe weist mehrere Getriebestufen und mehrere Schaltelemente auf.

Dokument DE 101 15 985 A1 offenbart ein lastschaltbares Mehrstufengetriebe in Planetenbauweise gemäß dem Oberbegriff von Anspruch 1.

Vor diesem Hintergrund schafft die vorliegende Erfindung ein verbessertes lastschaltbares Mehrstufengetriebe in Planetenbauweise für ein Fahrzeug gemäß dem Hauptanspruch. Vorteilhafte Ausgestaltungen ergeben sich aus den Unteransprüchen und der nachfolgenden Beschreibung.

Ein lastschaltbares Mehrstufengetriebe in Planetenbauweise, insbesondere Automatgetriebe für ein Fahrzeug, weist eine Antriebswelle und eine Abtriebswelle, sechs Schaltelemente, zumindest zwei Stirnradstufen und drei Planetenradsätze mit jeweils einem Sonnenrad, einem Hohlrad und einem Planetenträger mit mehreren Planetenrädern auf, wobei der Planetenträger in einem Steg zusammengeführt ist. Die beiden Wellenstränge sind über die zumindest zwei Stirnradstufen miteinander verbindbar. Durch ein selektives Eingreifen der sechs Schaltelemente sind verschiedene Übersetzungsverhältnisse zwischen der Antriebswelle und der Abtriebswelle bewirkbar. Dadurch sind eine Mehrzahl an Vorwärtsgängen, insbesondere zumindest neun Vorwärtsgänge, und zumindest ein Rückwärtsgang realisierbar.

Bei dem Fahrzeug kann es sich um ein Kraftfahrzeug, beispielsweise einen Personenkraftwagen, einen Lastkraftwagen oder ein sonstiges Nutzfahrzeug handeln. Das Fahrzeug kann mit einem Verbrennungsmotor und gleichzeitig oder alternativ mit einem Elektro-Antrieb ausgestattet sein, also auch als ein HybridFahrzeug ausgeführt sein. Die Aufteilung der gekoppelten Planetenradstufen auf nur zwei Wellenstränge führt zu einer kurzen Baulänge, aber auch zu einer kompakten Gesamtanordnung.

Unter einem Schaltelement kann je nach Ausführungsform eine Kupplung oder eine Bremse verstanden werden. Ein Schaltelement kann sowohl als ein reibschlüssiges als auch als ein formschlüssiges Schaltelement ausgeführt sein. Ein eingesetztes Schaltelement kann als eine lastschaltende Kupplung oder eine lastschaltende Bremse ausgebildet sein. Insbesondere kann ein Schaltelement als eine kraftschlüssige Kupplung oder als eine kraftschlüssige Bremse, wie z.B. eine Lamellenkupplung, eine Bandbremse oder eine Konuskupplung, ausgeführt sein. Des weiteren kann ein Schaltelement als eine formschlüssige Bremse oder eine formschlüssige Kupplung, wie z.B. eine Synchronisierung oder eine Klauenkupplung, ausgeführt sein. Für die sechs Schaltelemente des Mehrstufengetriebes können Schaltelemente unterschiedlicher Art eingesetzt werden.

Für die Stirnradstufen und für die Planetenradsätze kann auf bekannte Anordnungen zurückgegriffen werden. Beispielsweise kann das Mehrstufengetriebe genau zwei Stirnradstufen, also nicht mehr als zwei Stirnradstufen oder genau drei Stirnradstufen, also nicht mehr als drei Stirnradstufen aufweisen. Bezüglich der Planetenradsätze kann das Mehrstufengetriebe beispielsweise genau drei Planetenradsätze, also nicht mehr als drei Planetenradsätze aufweisen.

Für frontgetriebene Fahrzeuge ist eine Anordnung des Getriebes im Vorderteil des Fahrzeugs und eine Ausrichtung der Getriebehauptausrichtung quer zur Fahrzeug-Hauptachse und damit insbesondere eine parallele Anordnung der beiden Wellenstränge von Vorteil. Somit können die Antriebswelle und die Abtriebswelle parallel zueinander angeordnet sein. Das Mehrstufengetriebe weist vorteilhaft eine kurze axiale Bauweise auf, die ideal für die Frontquer-Bauweise ist. Ferner zeichnet sich das Mehrstufengetriebe durch einen geringen Bauaufwand, niedrige Kosten und niedriges Gewicht sowie eine gute Übersetzungsreihe, niedrige Absolutdrehzahlen, niedrige Relativdrehzahlen, niedrige Planetensatzmomente und niedrige Schaltelementmomente, gute Verzahnungswirkungsgrade und eine kompakte Bauweise aus.

Gemäß einer Ausführungsform handelt es sich bei dem Mehrstufengetriebe um ein 9-Gang-Planetenlastschaltgetriebe. Durch eine entsprechende Anordnung der Radsätze und der Schaltelemente kann das Mehrstufengetriebe auch als Frontquer-System nutzbar sein. Das Mehrstufengetriebe kann zumindest neun Vorwärtsgänge umfassen. Dabei kann das Mehrstufengetriebe mit drei Planetenradsätzen realisiert werden.

Somit kann das lastschaltbare Mehrstufengetriebe in Planetenbauweise über zumindest neun Vorwärtsgänge sowie einen Rückwärtsgang verfügen und eine für Kraftfahrzeuge sehr gut geeignete Übersetzung mit einer hohen Gesamtspreizung sowie günstigen Stufensprüngen aufweisen. Das Getriebe kann eine hohe Anfahrübersetzung in Vorwärtsrichtung ermöglichen und einen direkten Gang enthalten. Dabei erfordert das Mehrstufengetriebe nur einen geringen Bauaufwand und zeichnet sich insbesondere durch eine geringe Anzahl an Schaltelementen aus und vermeidet bei sequenzieller Schaltweise Doppelschaltungen. Dadurch kann bei Schaltungen in definierten Ganggruppen jeweils nur ein zuvor geschlossenes Schaltelement geöffnet und ein zuvor geöffnetes Schaltelement geschlossen werden.

Bezüglich des Mehrstufengetriebes lassen sich zwei grundsätzliche Anordnungen realisieren, die im Folgenden als erstes und ein nicht beanspruchtes drittes Hauptsystem bezeichnet werden. Weiterhin kann von dem ersten Hauptsystem ein zweites Hauptsystem durch eine geänderte Anordnung von zwei Planetenradsätzen auf dem ersten Wellenstrang abgeleitet werden. Im ersten und zweiten Hauptsystem sind die drei Planetenradsätze auf dem ersten Wellenstrang angeordnet. Im dritten Hauptsystem sind zwei der drei Planetenradsätze auf dem ersten Wellenstrang und einer der drei Planetenradsätze auf dem zweiten Wellenstrang angeordnet, wobei im Vergleich zum ersten Hauptsystem eine zusätzliche Stirnradstufe benötigt wird.

Für die drei Hauptsysteme können zusätzlich noch verschiedene Anordnungsvarianten umgesetzt werden. Dazu können Schaltelemente in einem Leistungspfad des Getriebes gleich wirkend an unterschiedlichen Stellen des Leistungspfades angeordnet werden. Insbesondere ergeben sich für die nachfolgend als erstes, drittes und viertes Schaltelement bezeichneten Schaltelemente verschiedenen Kopplungsmöglichkeiten an die verschiedenen Wellen des Mehrstufengetriebes. Somit lässt sich eine ganze Getriebefamilie realisieren.

Im Folgenden werden Ausführungsformen des ersten Hauptsystems beschrieben, welches gemäß Anspruch 1 aufgebaut ist.

Im Kraftfluss kann so verstanden werden, dass über das jeweilige Schaltelement eine Kraft übertragen werden kann, wenn das jeweilige Schaltelement geschlossen ist. Ist das Schaltelement dagegen geöffnet, so kann über das jeweilige Schaltelement keine Kraft übertragen werden, der Kraftfluss kann also unterbrochen sein.

Unter einem Verbindungselement kann eine Welle verstanden werden. Je nach Ausführungsform kann unter einem Verbindungselement entweder ein starres Element verstanden werden oder aber ein aus mindestens zwei über eine Kupplung gekoppelten Teilelementen zusammengesetztes Element verstanden werden. Somit können zwei mittels eines Verbindungselements verbundene Elemente verdrehfest miteinander verbunden sein und beispielsweise eine starre Welle bilden. Alternativ kann ein Verbindungselement eine Kupplung aufweisen. Auf jeder Welle des Mehrstufengetriebes kann prinzipiell ein Freilauf zum Gehäuse oder zu einer anderen Welle angeordnet werden.

Für das dargestellte erste Hauptsystem können einzelne der Schaltelemente an unterschiedlichen Stellen der Leistungspfade angeordnet werden ohne eine Veränderung in den Getriebeübersetzungen oder einer Schaltmatrix zu bewirken. So können in unterschiedlichen Anordnungsvarianten an unterschiedlichen Stellen Leistungspfade im Getriebe über Kupplungen, hier das erste und das vierte Schaltelement, verbunden oder getrennt werden, wobei dies gleich wirkend an verschiedenen Stellen eines Leistungspfades geschehen kann. So ergeben sich die folgend beschriebenen Alternativen Ausführungsformen für das erste Hauptsystem.

In einer Ausführungsform des ersten Hauptsystems kann das siebte Verbindungselement ein erstes Schaltelement der sechs Schaltelemente aufweisen. Dabei kann das erste Schaltelement im Kraftfluss zwischen der Antriebswelle und dem Steg des ersten Planetenradsatzes angeordnet sein.

In einer weiteren Ausführungsform des ersten Hauptsystems kann das zweite Verbindungselement das erste Schaltelement aufweisen. Dabei kann das erste Schaltelement im Kraftfluss zwischen dem Sonnenrad des ersten Planetenradsatzes und dem dritten und/oder vierten Verbindungselement angeordnet sein. In dieser Ausführungsform kann das erste Schaltelement im Kraftfluss zwischen dem Sonnenrad des ersten Planetenradsatzes und dem ersten Stirnrad der ersten Stirnradstufe und dem Hohlrad des dritten Planetenradsatzes angeordnet sein.

In einer weiteren Ausführungsform des ersten Hauptsystems kann das fünfte Verbindungselement das erste Schaltelement aufweisen. Dabei kann das erste Schaltelement im Kraftfluss zwischen einem Hohlrad des ersten Planetenradsatzes und einem ersten Stirnrad der zweiten Stirnradstufe angeordnet sein.

In einer weiteren Ausführungsform des ersten Hauptsystems kann das sechste Verbindungselement das erste Schaltelement aufweisen. Dabei kann das erste Schaltelement im Kraftfluss zwischen einem zweiten Stirnrad der ersten Stirnradstufe und der Abtriebswelle angeordnet sein.

In einer Ausführungsform als erstes Hauptsystem kann das dritte Schaltelement der sechs Schaltelemente im Kraftfluss zwischen der Antriebswelle und dem Steg des zweiten Planetenradsatzes angeordnet sein. In einer Ausführungsform als zweites Hauptsystem kann das dritte Schaltelement der sechs Schaltelemente im Kraftfluss zwischen dem Steg des zweiten Planetenradsatzes und dem neunten Verbindungselement angeordnet sein, Beide Anordnungsvarianten des dritten Schaltelements können mit den beschriebenen Anordnungsvarianten des ersten Schaltelements sowie mit den später beschriebenen Anordnungsvarianten des vierten Schaltelements kombiniert werden.

Ferner kann gemäß weiterer Ausführungsformen das dritte Verbindungselement ein viertes Schaltelement der sechs Schaltelemente aufweisen. Dabei kann das vierte Schaltelement im Kraftfluss zwischen dem gemeinsamen Verbindungspunkt von drittem, vierten und zehntem Verbindungselement und dem ersten Stirnrad der ersten Stirnradstufe angeordnet sein.

Die Hybridisierung von Fahrzeugen gewinnt immer mehr an Bedeutung.

Gemäß einer Ausführungsform kann auf der Antriebswelle eine Leistungsquelle angeordnet sein. Bei der Leistungsquelle kann es sich um einen Motor, beispielsweise um einen Elektromotor handeln. Die Leistungsquelle kann achsparallel zur Antriebswelle angeordnet werden. In einem weiteren Ausführungsbeispiel kann die Leistungsquelle direkt auf der Antriebswelle angeordnet werden.

Ein weiterer Vorteil des hier vorgestellten Mehrstufengetriebes besteht darin, dass an jeder Welle zusätzlich eine elektrische Maschine als Generator und/oder als zusätzliche Antriebsmaschine anbringbar ist. Wie bereits beschrieben, kann prinzipiell auf jeder Welle, hier auch als Verbindungselement bezeichnet, eine elektrische Maschine oder sonstige Kraft-/Leistungsquelle angeordnet werden. Allerdings erscheint insbesondere für die elektrische Maschine eine Verknüpfung mit der Antriebswelle sinnvoll. Sie kann entweder direkt auf oder achsparallel über ein Radpaar mit der Antriebswelle verbunden sein. Diese Varianten sind für alle dargestellten Konzepte möglich.

Gemäß den Ausführungsformen sind alle drei Planetenradsätze beispielhaft als sogenannte Minus-Planetenradsätze ausgeführt, deren jeweiliges Hohlrad bei festgehaltenem Steg in zum Sonnenrad entgegengesetzter Richtung rotiert.

In einer nicht beanspruchten Ausführungsform kann zumindest ein Planetenradsatz als sogenannter Plus-Planetenradsatz ausgeführt werden, wenn die beschriebene Steg- und Hohlradanbindung des betreffenden Planetenradsatzes getauscht wird und die Standübersetzung angepasst wird. Ein Plus-Planetenradsatz bezeichnet ein Planetengetriebe, dessen Hohlrad mit gleicher Drehrichtung rotiert wie das Sonnenrad, wenn der Steg festgehalten wird. Ein Minus-Planetenradsatz weist an einem Planetenträger verdrehbar gelagerte Planetenräder auf, die mit Sonnenrad und Hohlrad dieses Planetenradsatzes kämmen, sodass sich das Hohlrad bei festgehaltenem Planetenträger und drehendem Sonnenrad in zur Sonnenraddrehrichtung entgegengesetzter Richtung dreht. Ein Plus-Planetenradsatz weist an einem Planetenträger verdrehbar gelagerte und miteinander in Zahneingriff stehende innere und äußere Planetenräder auf, wobei das Sonnenrad dieses Planetenradsatzes mit den genannten inneren Planetenrädern und das Hohlrad dieses Planetenradsatzes mit den genannten äußeren Planetenrädern kämmen, sodass sich das Hohlrad bei festgehaltenem Planetenträger und drehendem Sonnenrad in zur Sonnenraddrehrichtung gleicher Richtung dreht.

Generell gilt für die unterschiedlichen Ausführungsformen, dass überall dort, wo es die Bindbarkeit zulässt, einzelne oder mehrere Minus-Planetenradsätze in Plus-Planetenradsätze umgewandelt werden können, wenn gleichzeitig die Steg-und Hohlradanbindung getauscht, und der Betrag der Standübersetzung um eins erhöht wird.

Gemäß einer Ausführungsform kann sich der erste Vorwärtsgang des Mehrstufengetriebes durch Schließen des zweiten, vierten und fünften Schaltelements ergeben. Der zweite Vorwärtsgang kann sich durch Schließen des zweiten, dritten und vierten Schaltelements ergeben. Der dritte Vorwärtsgang kann sich durch Schließen des zweiten, vierten und fünften Schaltelements ergeben. Der vierte Vorwärtsgang kann sich durch Schließen des ersten, dritten und vierten Schaltelements ergeben. Der fünfte Vorwärtsgang kann sich durch Schließen des ersten, dritten und fünften Schaltelements ergeben. Der sechste Vorwärtsgang kann sich durch Schließen des ersten, zweiten und dritten Schaltelements ergeben. Der siebte Vorwärtsgang kann sich durch Schließen des ersten, zweiten und fünften Schaltelements ergeben. Der achte Vorwärtsgang kann sich durch Schließen des ersten, zweiten und sechsten Schaltelements ergeben. Der neunte Vorwärtsgang kann sich durch Schließen des ersten, fünften und sechsten Schaltelements ergeben. Der Rückwärtsgang kann sich durch Schließen des vierten, fünften und sechsten Schaltelements ergeben.

Das beschriebene Getriebe kann aus dem antriebsseitigen ersten Wellenstrang und dem abtriebsseitigen zweiten Wellenstrang bestehen. Diese beiden Wellenstränge können durch zumindest zwei Leistungspfade verbunden sein, zu denen die zumindest zwei Stirnradstufen gehören können. Wenn Leistungspfade durch Kupplungen getrennt werden, so kann das gleichwertig an einer beliebigen Stelle innerhalb des Leistungspfades geschehen. Wenn solche Leistungspfade durch Bremsen mit dem Getriebegehäuse verbindbar sind, so kann diese Bremse gleichwertig auch an anderen Stellen des Leistungspfades angreifen. Identische Standübersetzungen können durch unterschiedliche Planetengetriebestrukturen erzeugt werden, die dann im Sinne dieser Erfindung als gleichwertig gelten sollen.

Die Erfindung wird anhand der beigefügten Zeichnungen beispielhaft näher erläutert. Es zeigen:
Fig. 1 eine schematische Darstellung eines Fahrzeugs mit einem lastschaltbaren Mehrstufengetriebe gemäß einem Ausführungsbeispiel der vorliegenden Erfindung;
Fig. 2 ein Getriebeschemata eines 9-Gang-Mehrstufengetriebes gemäß einem Ausführungsbeispiel der vorliegenden Erfindung;
Fig.3 ein beispielhaftes Schaltschema eines Mehrstufengetriebes gemäß einem Ausführungsbeispiel der vorliegenden Erfindung;
Fig. 4 und 5 Ausführungsvarianten eines ersten Hauptsystems eines Mehrstufengetriebes gemäß einem Ausführungsbeispiel der vorliegenden Erfindung;
Fig. 6 Darstellung eines zweiten Hauptsystems gemäß einem Ausführungsbeispiel der vorliegenden Erfindung;
Fig. 7 und 8 Verblockungsvarianten eines zweiten Hauptsystems eines Mehrstufengetriebes gemäß einem Ausführungsbeispiel der vorliegenden Erfindung;
Fig.9 Darstellung eines nicht beanspruchten dritten Hauptsystems;
Fig. 10 Ausführungsvarianten des dritten Hauptsystems ;
Fig 11 schematische Darstellung eines weiteren nicht beanspruchten Hauptsystems als Kombination des zweiten und des dritten Hauptsystems;
Fig. 12 Verblockungsvarianten des in Fig. 11 gezeigten nicht beanspruchten weiteren Hauptsystems;
Fig. 13 eine schematische Darstellung des ersten Hauptsystems mit einer Leistungsquelle gemäß einem Ausführungsbeispiel der vorliegenden Erfindung; und
Fig. 14 eine schematische Darstellung eines Mehrstufengetriebes mit einer Leistungsquelle gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

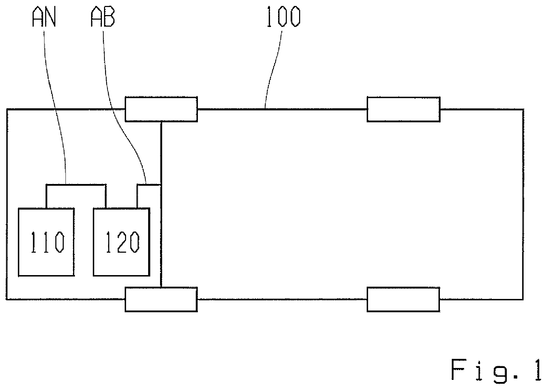

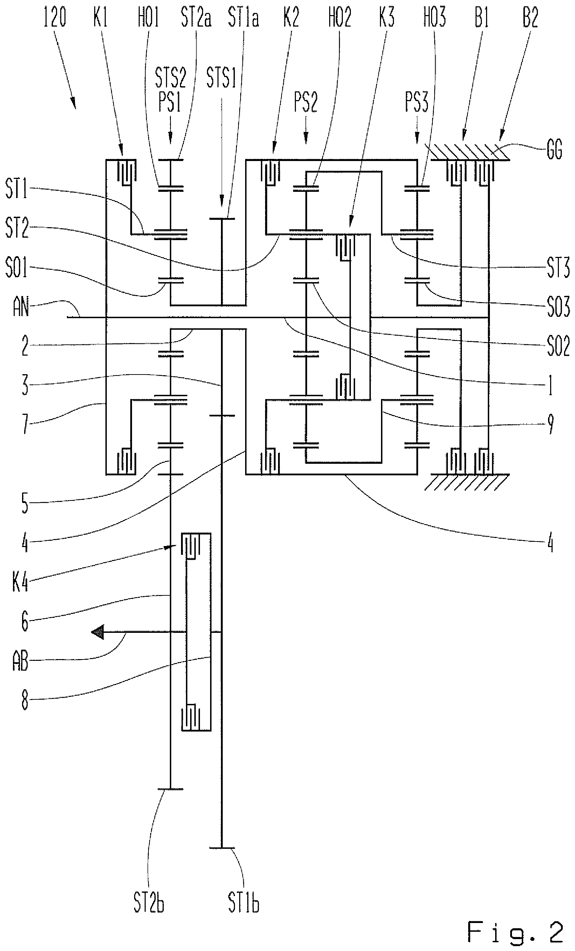

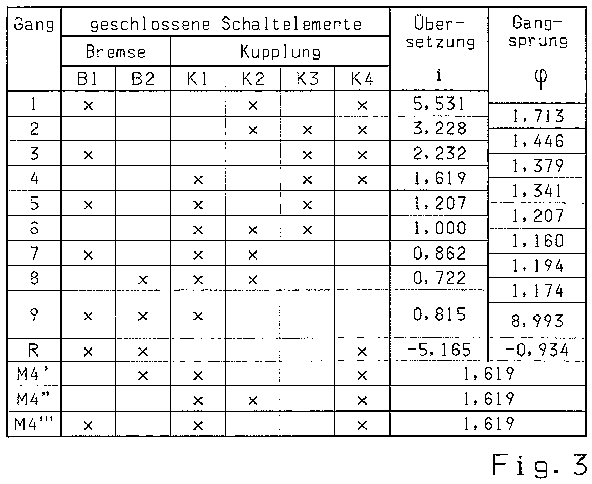

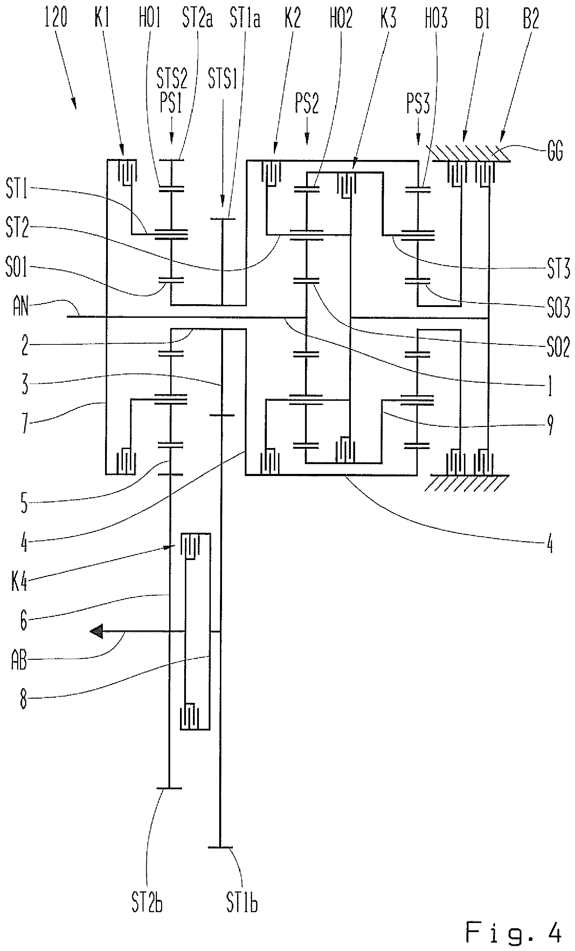

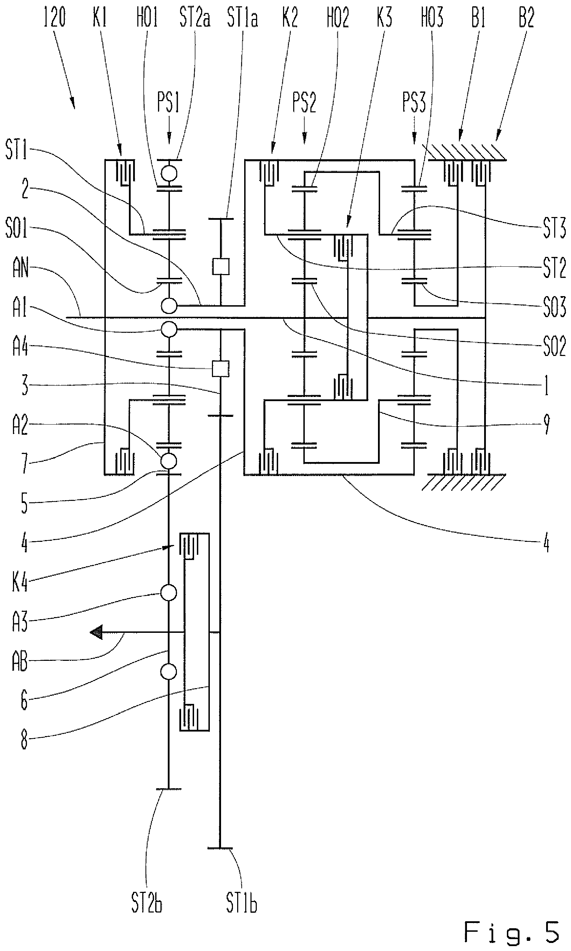

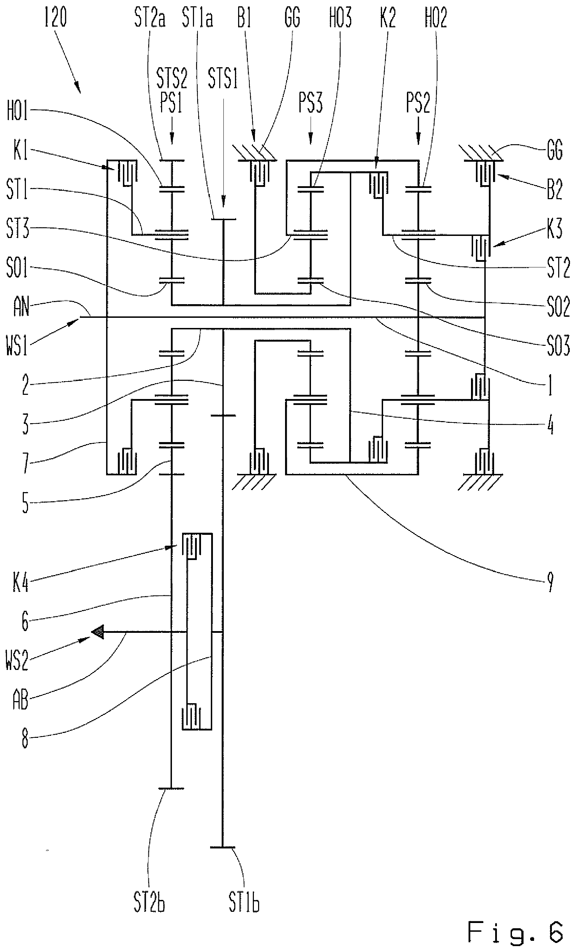

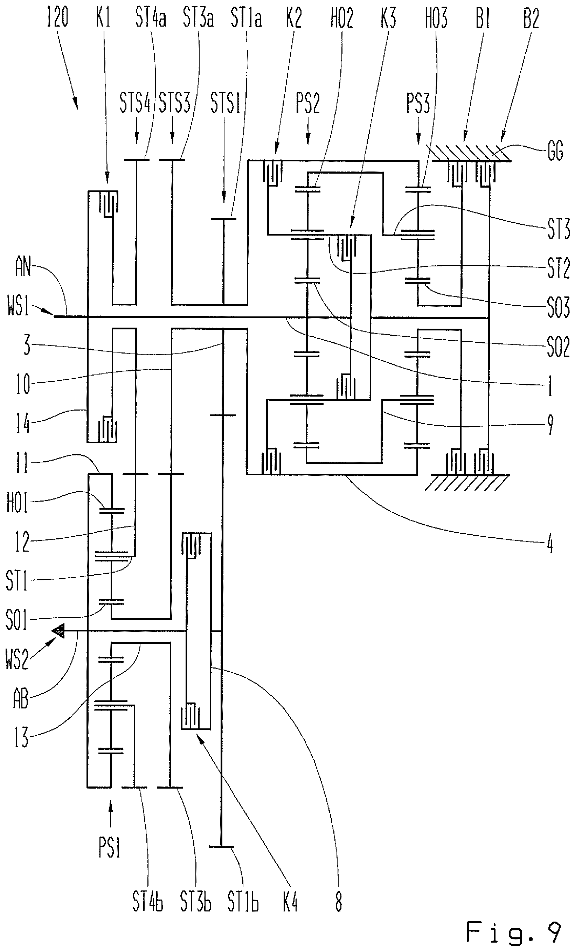

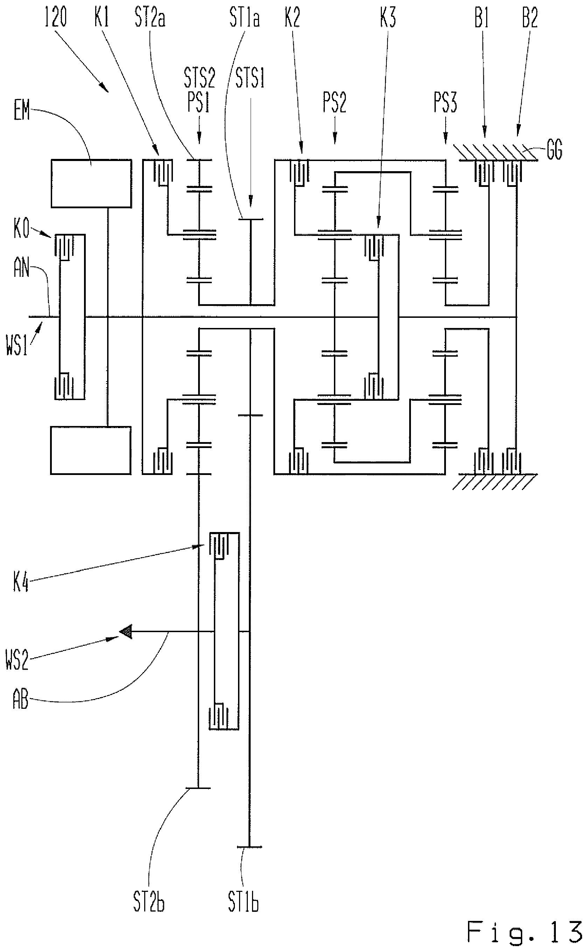

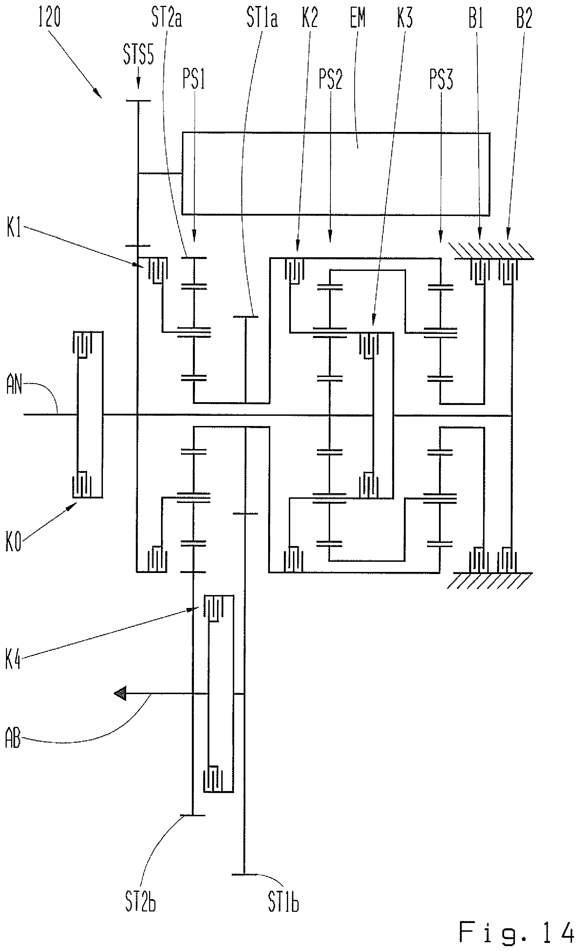

Im Nachfolgenden wird anhand von Fig. 1 ein Überblick über den Einsatz eines lastschaltbaren Mehrstufengetriebes gegeben. Anschließend wird in Fig. 2 ein erstes Hauptsystem eines lastschaltbaren Mehrstufengetriebes als ein Ausführungsbeispiel der vorliegenden Erfindung vorgestellt und später anhand der Figuren 4 und 5 in unterschiedlichen Verblockungsvarianten beschrieben. Ein zweites Hauptsystem eines lastschaltbaren Mehrstufengetriebes und unterschiedliche Ausführungsvarianten hiervon werden in den Figuren 6 bis 8 dargestellt. Die Figuren 9 bis 12 zeigen ein drittes Hauptsystem eines lastschaltbaren Mehrstufengetriebes und unterschiedliche Ausführungsvarianten hiervon. Die Figuren 13 und 14 zeigen eine Hybridisierung eines lastschaltbaren Mehrstufengetriebes am Beispiel des ersten Hauptsystems. Fig. 3 zeigt eine Schaltmatrix für ein erfindungsgemäßes lastschaltbares Mehrstufengetriebe.

Fig. 1 zeigt eine schematische Darstellung eines Fahrzeugs 100 mit einem Motor 110 und einem lastschaltbaren Mehrstufengetriebe 120 in Planetenbauweise gemäß einem Ausführungsbeispiel der vorliegenden Erfindung. Das lastschaltbare Mehrstufengetriebe 120, auch Planetenlastschaltgetriebe oder Lastschalteinheit genannt, ist gemäß diesem Ausführungsbeispiel in Frontquer-Bauweise in dem Fahrzeug 100 eingebaut. Der Motor 110, beispielsweise ein Verbrennungsmotor, ist mittels einer Antriebswelle AN mit dem lastschaltbaren Mehrstufengetriebe 120 verbunden. Eine Abtriebswelle AB des lastschaltbaren Mehrstufengetriebes 120 verbindet das lastschaltbare Mehrstufengetriebe 120 mit der Vorderachse des Fahrzeugs 100, um das Fahrzeug 100 anzutreiben.

Gemäß einem Ausführungsbeispiel umfasst das lastschaltbare Mehrstufengetriebe drei Planetenradsätze, zwei beziehungsweise drei Stirnradstufen und sechs Schaltelemente, davon vier Kupplungen und zwei Bremsen, wobei zwei Schaltelemente gleichzeitig zu schalten sind. Das lastschaltbare Mehrstufengetriebe 120 weist keine festen Gehäusekopplungen auf und kann neun Vorwärtsgänge und einen Rückwärtsgang schalten. Als Anfahrelement kann ein hydrodynamischer Drehmomentwandler, eine hydrodynamische Kupplung, eine zusätzliche Anfahrkupplung, eine integrierte Anfahrkupplung oder -bremse, eine zusätzliche elektrische Maschine oder eine Powershuttle-Einheit beziehungsweise PowerReversier-Einheit dienen.

Fig. 2 zeigt ein Getriebeschemata eines lastschaltbaren Mehrstufengetriebes 120 gemäß einem Ausführungsbeispiel der vorliegenden Erfindung. Das Ausführungsbeispiel zeigt eine als erstes Hauptsystem bezeichnete Ausführungsform eines Mehrstufengetriebes 120 gemäß der beschriebenen Erfindung. Bei dem lastschaltbaren Mehrstufengetriebe 120 kann es sich um das anhand von Fig. 1 gezeigte Mehrstufengetriebe 120 handeln. Das Mehrstufengetriebe 120, auch Planetenlastschaltgetriebes genannt, ist gemäß diesem Ausführungsbeispiel als ein 9-Gang-Mehrstufengetriebe realisiert.

Das Mehrstufengetriebe 120 umfasst zwei parallele Wellenstränge WS1, WS2, sechs Schaltelemente K1, K2, K3, K4, B1, B2, zwei Stirnradstufen STS1, STS2 und drei Planetenradsätze PS1, PS2, PS3, die alle in einem Gehäuse GG des Mehrstufengetriebes 120 angeordnet sind. Alle drei Planetenradsätze PS1, PS2, PS3 sind in diesem Ausführungsbeispiel als einfache Minus-Planetenradsätze ausgebildet, deren jeweiliges Hohlrad HO1, H02, H03 bei festgehaltenem Steg ST1, ST2, ST3 in zum Sonnenrad SO1, S02, S03 entgegengesetzter Richtung rotiert. Ein Minus-Planetenradsatz weist bekanntlich an einem Planetenträger verdrehbar gelagerte Planetenräder auf, die mit Sonnenrad und Hohlrad dieses Planetenradsatzes kämmen. Die drei Planetenradsätze PS1, PS2, PS3 sind in axialer Richtung in der Reihenfolge "PS1, PS2, PS3" koaxial hintereinander auf dem ersten Wellenstrang WS1 der zwei parallelen Wellenstränge WS1, WS2 angeordnet.

Ein erstes Stirnrad ST1 a einer ersten Stirnradstufe STS1 der zwei Stirnradstufen STS1, STS2 und ein erstes Stirnrad ST2a einer zweiten Stirnradstufe STS2 der zwei Stirnradstufen STS1, STS2 sind koaxial hintereinander auf dem ersten Wellenstrang WS1 zwischen dem ersten Planetenradsatz PS1 und dem zweiten Planetenradsatz PS2 angeordnet. Zusammen mit den drei Planetenradsätzen PS1, PS2, PS3 sind die beiden Stirnräder ST1 a, ST2a in der Reihenfolge "PS1/ST2a, ST1 a, PS2, PS3" koaxial hintereinander auf dem ersten Wellenstrang WS1 angeordnet.

Die Antriebswelle AN ist auf dem ersten Wellenstrang WS1 angeordnet, die Abtriebswelle AB ist auf einem zweiten Wellenstrang WS2 der zwei parallelen Wellenstränge WS1, WS2 angeordnet. Weiterhin sind die beiden Wellenstränge WS1, WS2 über die zwei Stirnradstufen STS1, STS2 miteinander verbunden.

Die Schaltelemente K1, K2, K3, K4 sind als Kupplungen ausgebildet, die zwei Schaltelemente B1, B2 sind als Bremsen ausgebildet und werden im Folgenden teilweise auch als solche bezeichnet. Durch ein selektives Eingreifen der sechs Schaltelemente K1, K2, K3, K4, B1, B2 sind verschiedene Übersetzungsverhältnisse zwischen der Antriebswelle AN und der Abtriebswelle AB bewirkbar. Auf diese Weise sind zumindest neun Vorwärtsgänge und zumindest ein Rückwärtsgang realisierbar.

Im Folgenden wird eine Kopplung der einzelnen Elemente der drei Planetenradsätze PS1, PS2, PS3 untereinander, zu den beiden Stirnradstufen STS1, STS2 und zur Antriebswelle AN und zur Abtriebswelle AB beschrieben.

Das Mehrstufengetriebe 120 weist zumindest neun Verbindungselemente auf, die mit 1 bis 9 bezeichnet sind. Die Verbindungselemente 1, 2, 3, 4, 5, 6, 7, 8, 9 können als Wellen ausgebildet sein, wobei innerhalb der Verbindungselemente 1, 2, 3, 4, 5, 6, 7, 8, 9 jeweils auch ein oder mehrere Schaltelemente angeordnet sein können, wie es nachfolgend noch detaillierter ausgeführt wird.

Wie in Fig. 2 gezeigt, sind ein Sonnenrad S02 eines zweiten Planetenradsatzes PS2 der drei Planetenradsätze PS1, PS2, PS3 und die Antriebswelle AN verdrehfest miteinander verbunden und bilden ein erstes Verbindungselement 1. Ein Sonnenrad SO1 eines ersten Planetenradsatzes PS1 der drei Planetenradsätze PS1, PS2, PS3, ein Stirnrad STS1 a einer ersten Stirnradstufe STS1 und ein Hohlrad H03 des dritten Planetenradsatzes PS3 der drei Planetenradsätze PS1, PS2, PS3 sind über ein zweites, drittes und viertes Verbindungselement 2, 3, 4 miteinander verbunden. Das zweite, dritte und vierte Verbindungselement 2, 3, 4 weisen einen gemeinsamen Verbindungspunkt auf. Das zweite Verbindungselement verbindet den gemeinsamen Verbindungspunkt des zweiten, dritten und vierten Verbindungselements 2, 3, 4 mit dem Sonnenrad SO1 des ersten Planetenradsatzes PS1. Das dritte Verbindungselement 3 verbindet den gemeinsamen Verbindungspunkt des zweiten, dritten und vierten Verbindungselements 2, 3, 4 mit dem ersten Stirnrad ST1 a der ersten Stirnradstufe STS1. Das vierte Verbindungselement 4 verbindet den gemeinsamen Verbindungspunkt des zweiten, dritten und vierten Verbindungselements 2, 3, 4 mit dem Hohlrad H03 des dritten Planetenradsatzes PS3.

Das zweite Verbindungselement 2 und das vierte Verbindungselement 4 sind miteinander verbunden, sodass auch zwischen dem Hohlrad H02 des zweiten Planetenradsatzes PS2 und dem Sonnenrad SO1 des ersten Planetenradsatzes PS1 eine Verbindung besteht. Das erste Stirnrad ST1 a der zweiten Stirnradstufe STS2 ist mit einem Hohlrad HO1 des ersten Planetenradsatzes PS1 verbunden und bildet ein fünftes Verbindungselement 5. Ein zweites Stirnrad ST2b der zweiten Stirnradstufe STS2 und die Abtriebswelle AB sind verbunden und bilden ein sechstes Verbindungselement 6. Ein Steg ST1 des ersten Planetenradsatzes PS1 ist mit der Antriebswelle AN verbunden und bildet ein siebtes Verbindungselement 7. Ein zweites Stirnrad ST1 b der ersten Stirnradstufe STS1 und die Abtriebswelle AB sind verbunden und bilden ein achtes Verbindungselement 8. Ein Hohlrad H02 des zweiten Planetenradsatzes PS2 und ein Steg ST3 des dritten Planetenradsatzes PS3 sind verdrehfest miteinander verbunden und bilden ein neuntes Verbindungselement 9.

Das siebte Verbindungselement 7 weist ein erstes Schaltelement K1 der sechs Schaltelemente K1, K2, K3, K4, B1, B2 auf, wobei das erste Schaltelement K1 im Kraftfluss zwischen der Antriebswelle AN und dem Steg ST1 des ersten Planetenradsatzes PS1 angeordnet ist. Das erste Schaltelement K1 ist als Kupplung ausgebildet. Ein zweites Schaltelement K2 der sechs Schaltelemente K1, K2, K3, K4, B1, B2 ist im Kraftfluss zwischen dem vierten Verbindungselement 4 und einem Steg ST2 des zweiten Planetenradsatzes PS2 angeordnet. Ein drittes Schaltelement K3 der sechs Schaltelemente K1, K2, K3, K4, B1, B2 ist im Kraftfluss zwischen dem Hohlrad H02 des zweiten Planetenradsatzes PS2 und der Antriebswelle AN angeordnet. Das achte Verbindungselement 8 weist ein viertes Schaltelement K4 der sechs Schaltelemente K1, K2, K3, K4, B1, B2 auf, wobei das vierte Schaltelement K4 im Kraftfluss zwischen dem zweiten Stirnrad ST1 b der ersten Stirnradstufe STS1 und der Abtriebswelle AB angeordnet ist. Ein fünftes Schaltelement B1 der sechs Schaltelemente K1, K2, K3, K4, B1, B2 ist im Kraftfluss zwischen dem Sonnenrad S03 des dritten Planetenradsatzes PS3 und einem Getriebegehäuse GG angeordnet. Ein sechstes Schaltelement B2 der sechs Schaltelemente K1, K2, K3, K4, B1, B2 ist im Kraftfluss zwischen dem Steg ST2 des zweiten Planetenradsatzes PS2 und dem Getriebegehäuse GG angeordnet.

Entsprechend der räumlichen Anordnung der drei Planetenradsätze und der zwei ersten Stirnräder der zwei Stirnradstufen, in axialer Richtung gesehen in der Folge "PS1/ST2a, ST1 a, PS2, PS3", verläuft das erste Verbindungselement 1 des Mehrstufengetriebes 120 abschnittsweise zentrisch innerhalb des zweiten Verbindungselements 2, des dritten Verbindungselements 3 und des vierten Verbindungselements 4. Weiterhin umgreift das siebte Verbindungselement mit dem ersten Schaltelement K1 die Antriebswelle AN beziehungsweise das erste Verbindungselement 1 abschnittsweise in axialer Richtung. Das erste Stirnrad ST1 a der ersten Stirnradstufe ist radial über dem ersten Planetenradsatz PS1 angeordnet.

Das fünfte Schaltelement B1 und das sechste Schaltelement B2, also die beiden Bremsen B1, B2 sind in dem in Fig. 2 dargestellten Ausführungsbeispiel räumlich gesehen axial unmittelbar nebeneinander in einem Bereich außerhalb der Folge "PS1/ST2a, ST1 a, PS2, PS3" neben dem dritten Planetenradsatz PS3 angeordnet. Dabei ist das fünfte Schaltelement B1 zwischen dem dritten Planetenradsatz PS3 und dem sechsten Schaltelement B2 angeordnet. Das fünfte und das sechste Schaltelement B1, B2 sind mit dem Getriebegehäuse GG verbunden. Die kinematische Anbindung des fünften und sechsten Schaltelements B1, B2 an den zweiten beziehungsweise dritten Planetenradsatz PS2, PS3 bedingt in diesem Anordnungsbeispiel, dass das Schaltelement B1 näher am dritten Planetenradsatz PS3 als das Schaltelement B2 angeordnet ist.

Die in Fig. 2 dargestellte räumliche Anordnung der Schaltelemente B1, B2 ist als beispielhaft zu verstehen. So kann das Schaltelement B1 beispielsweise auch zumindest teilweise radial über dem Schaltelement B2 angeordnet sein oder alternativ das sechste Schaltelement B2 in den Bereich der Rotationsachse des ersten Wellenstrangs WS1 angeordnet sein.

In dem in Fig. 2 dargestellten Ausführungsbeispiel ist das dritte Schaltelement K3 axial unmittelbar zwischen dem Steg ST2 des zweiten Planetenradsatzes PS2 und dem Steg ST3 des dritten Planetenradsatzes PS3 angeordnet. Das vierte Verbindungselement, also die Verbindung des Hohlrads H03 des dritten Planetenradsatzes PS3 mit dem gemeinsamen Verbindungspunkt des zweiten, dritten und vierten Verbindungselements 2, 3 ,4 umgreift das neunte Verbindungselement 9, das zweite Schaltelement K2, das dritte Schaltelement K3 und den zweiten Planetenradsatz PS2 in axialer Richtung vollständig. Die räumliche Anordnung der beiden zweiten Stirnräder ST1 b, ST2b der beiden Stirnradstufen STS1, STS2 ist in axialer Richtung gesehen auf dem zweiten Wellenstrahlung WS2 in der Form "ST2b, ST1 b". Das vierte Schaltelement K4 ist zwischen den beiden zweiten Stirnrädern ST1 b, ST2b der zweit Stirnradstufen STS1, STS2 angeordnet.

Die ersten vier Schaltelemente K1, K2, K3, K4, das heißt die vier Kupplungen, sind in einem Ausführungsbeispiel als reibschlüssig schaltbare Lammellenkupplungen ausgeführt, aber können selbstverständlich in einem weiteren Ausführungsbeispiel als formschlüssig schaltbare Klauenkupplung oder Konuskupplung ausgeführt sein. Die als Bremsen ausgeführten Schaltelemente B1, B2 sind in einem Ausführungsbeispiel als reibschlüssig schaltbare Lamellenbremsen ausgeführt, können gemäß anderen Ausführungsbeispielen jedoch auch als reibschlüssig schaltbare Bandbremse oder als formschlüssig schaltbare Klauen- oder Konusbremse ausgeführt sein.

Aus dem in Fig. 2 dargestellten Getriebe 120 lassen sich mehrere wirkungsgleiche Getriebevarianten ableiten. Für die Kupplung K1 des in Fig. 2 gezeigten Hauptsystems gibt es drei weitere wirkungsgleiche Anordnungsmöglichkeiten, für die Kupplung K4 eine weitere Anordnungsmöglichkeit. Dies ist in der folgenden Figur 5 im Detail ausgeführt. Weiterhin ist eine weitere Ausführungsvariante realisierbar, wenn die Anordnung des dritten Schaltelements und die Koppelung des zweiten Planetenradsatzes geändert werden. So ist es möglich, die Verblockung von dem zweiten Planetenradsatz PS2 durch das dritte Schaltelement K3, beziehungsweise die Kupplung K3 - Koppelung von Sonne und Steg, wie in Fig. 2 mit dem ersten Hauptsystem dargestellt, durch eine Koppelung von Steg und Hohlrad zu ersetzen. Eine derartige Ausführungsvariante ist in Fig. 4 dargestellt. Wenn es die Bindbarkeit zulässt, ist auch eine Verblockung von Sonne und Hohlrad möglich.

Fig.3 zeigt ein beispielhaftes Schaltschema eines Mehrstufengetriebes gemäß einem Ausführungsbeispiel der vorliegenden Erfindung. Bei dem Mehrstufengetriebe, beziehungsweise Planetenlastschaltgetriebe, kann es sich um eines der in den vorangegangen bzw. nachfolgend beschriebenen Mehrstufengetrieben handeln.

Von links nach rechts gesehen sind in der ersten Spalte der in Fig. 3 gezeigten Tabelle Gangstufen angegeben, die jeweils einen Gang des Mehrstufengetriebes bezeichnen. In den folgenden sechs Spalten, reserviert für die sechs Schaltelemente B1, B2, K1, K2, K3, K4, wie sie beispielsweise bereits anhand von Fig. 2 beschrieben wurden, ist jeweils für ein geschlossenes Schaltelement B1, B2, K1, K2, K3, K4ein Kreuz in der Tabelle eingetragen. Dabei sind zuerst die beiden Bremsen B1 und B2 und nachfolgend die vier Kupplungen K1, K2, K3, K4 aufgelistet. Bei einem geschlossenen Schaltelement B1, B2, K1, K2, K3, K4 erfolgt eine Kraftübertragung über das jeweilige Schaltelement B1, B2, K1, K2, K3, K4. Dabei kann das jeweilige Schaltelement B1, B2, K1, K2, K3, K4 ein starres Verbindungselement ausbilden. Die vorletzte Spalte zeigt eine beispielhafte Übersetzung i, gefolgt von einem sich daraus ergebenden Gangsprung ϕ in der letzten Spalte. Die mit einem "x" gekennzeichneten geschlossenen Schaltelemente können auch mit dem englischsprachigen Ausdruck "engaged shifting elements" bezeichnet werden. Für jeden Gang sind drei der Schaltelemente B1, B2, K1, K2, K3, K4 offen und drei der Schaltelemente B1, B2, K1, K2, K3, K4 geschlossen.

Dem Schaltschema können neben der Schaltlogik auch beispielhafte Werte für die jeweiligen Übersetzungen i der einzelnen Gangstufen und die daraus zu bestimmenden Gangsprünge ϕ entnommen werden. Die angegebenen Übersetzungen i ergeben sich aus den (typischen) Standgetriebeübersetzungen der drei Planetenradsätze PS1, PS2, PS3 von minus 2,404 für den ersten Planetenradsatz PS1, minus 1,953 für den zweiten Planetenradsatz PS2 und minus 2,191 für den dritten Planetenradsatz sowie für die erste Stirnradstufe STS1 von 3,235 und für die zweite Stirnradstufe STS2 von 1,000. Die (typischen) Standgetriebeübersetzungen betragen für die dritte Stirnradstufe STS3 und für die vierte Stirnradstufe STS4 jeweils 1,000. Die Standübersetzungen der Stirnradstufen sind dabei in einem konstruktionsbedingten Toleranzbereich veränderbar, ohne wesentliche Auswirkungen auf die Getriebeübersetzungen zu haben. Des weiteren kann dem Schaltschema entnommen werden, dass bei sequenzieller Schaltweise Doppelschaltungen beziehungsweise Gruppenschaltungen vermieden werden. Zwei benachbarte Gangstufen benutzen zwei der notwendigen drei Schaltelemente gemeinsam. Der sechste Gang ist vorzugsweise als direkter Gang ausgebildet. Die angegebenen Übersetzungen und daraus abgeleiteten Größen stellen eine bevorzugte Ausführungsform dar. Der Fachmann mag auch andere Werte hier entsprechend der Anforderungen an das Mehrstufengetriebe einsetzen.

Wie bereits, beilspielsweise anhand von Fig. 2, beschrieben, bestehen die sechs Schaltelemente K1, K2, K3, K4, B1, B2 aus den vier Kupplungen K1, K2, K3, K4 und den zwei Bremsen B1, B2. In der folgenden Beschreibung wird für die ersten vier Schaltelemente K1, K2, K3, K4 die Bezeichnung Kupplung K1, K2, K3 und K4 und für das fünfte und sechste Schaltelement B1, B2 die Bezeichnung Bremse B1, B2 gewählt.

Der erste Vorwärtsgang ergibt sich durch Schließen der Bremse B1 und der Kupplungen K2, K4, der zweite Vorwärtsgang durch Schließen der Kupplungen K2, K3, K4, der dritte Vorwärtsgang durch Schließen der Bremse B1 und der Kupplungen K3, K4, der vierte Vorwärtsgang durch Schließen der Kupplungen K1, K3, K4, der fünfte Vorwärtsgang durch Schließen der Bremse B1 und der Kupplungen K1, K3, der sechste Vorwärtsgang durch Schließen der Kupplungen K1, K2, K3, der siebte Vorwärtsgang durch Schließen der Bremse B1 und der Kupplungen K1, K2, der achte Vorwärtsgang durch Schließen der Bremse B2 und der beiden Kupplungen K1, K2 sowie der neunte Vorwärtsgang durch Schließen der beiden Bremsen B1, B2 und der Kupplung, K1. Wie aus dem Schaltschema in Fig. 3 weiter ersichtlich, ergibt sich der Rückwärtsgang durch Schließen der beiden Bremsen B1, B2 und der Kupplung K4.

Die Übersetzung i kann auch mit dem Begriff "ratio" bezeichnet werden. Für den mit der Gangstufe 1 bezeichneten ersten Gang ergibt sich eine Übersetzung i von 5,531, für den mit der Gangstufe 2 bezeichneten zweiten Gang ergibt sich eine Übersetzung i von 3,228, für den dritten Gang ergibt sich eine Übersetzung i von 2,232, für den vierten Gang ergibt sich eine Übersetzung i von 1,619, für den fünften Gang ergibt sich eine Übersetzung i von 1,207, für den sechsten Gang ergibt sich eine direkte Übersetzung i von 1,000, für den siebten Gang ergibt sich eine Übersetzung i von 0,862, für den achten Gang ergibt sich eine Übersetzung i von 0,722 und für den neunten Gang ergibt sich eine Übersetzung i von 0,615. Wie aus dem Schaltschema weiter ersichtlich, ergibt sich für den Rückwärtsgang eine Übersetzung i von minus 5,165. Folglich ergibt sich von dem ersten Gang zum zweiten Gang ein Gangsprung ϕ, auch mit dem Begriff "step" bezeichnet, von 1,713, von dem zweiten Gang zum dritten Gang ein Gangsprung ϕ von 1,446, von dem dritten Gang zum vierten Gang ein Gangsprung ϕ von 1,379, von dem vierten Gang zum fünften Gang ein Gangsprung ϕ von 1,341, von dem fünften Gang zum sechsten Gang ein Gangsprung ϕ von 1,207, von dem sechsten Gang zum siebten Gang ein Gangsprung ϕ von 1,160, von dem siebten Gang zum achten Gang ein Gangsprung ϕ von 1,194, von dem achten Gang zum neunten Gang ein Gangsprung ϕ von 1,174. Somit weist das Getriebe eine Spreizung von 8,993 auf. Das Verhältnis von Rückwärtsgang zu dem ersten Gang beträgt minus 0,934 ist ist somit sehr nahe an einem idealen Wert von minus 1.

Die in der ersten Spalte aufgelisteten Mehrfachgänge M4', M4", M4'" sind weitere Schaltkombinationen, die ebenfalls den vierten Gang darstellen. Der erste Mehrfachgang M4' ergibt sich durch ein Schließen der Bremse B2 und der Kupplungen K1, K4, der zweite Mehrfachgang M4" ergibt sich durch ein Schließen der Kupplungen K1, K2, K4 und der dritte Mehrfachgang M4'" ergibt sich durch ein Schließen der Bremse B1 und der Kupplungen K1, K4.

Gemäß einem Ausführungsbeispiel der Erfindung ist ein Anfahren des Fahrzeugs, beispielsweise des in Fig. 1 gezeigten Fahrzeugs, mit einem im Getriebe integrierten Schaltelement möglich. Hierbei ist ein Schaltelement besonders geeignet, dass im ersten Vorwärtsgang und im Rückwärtsgang benötigt wird, hier also die Bremse B1 oder die Kupplung K4. Vorteilhafterweise wird die Kupplung K4 auch im zweiten Vorwärtsgang benötigt. Wird die Kupplung K4 als im Getriebe integriertes Anfahrelement genutzt, so ist damit sogar ein Anfahren in den ersten vier Vorwärtsgängen und dem Rückwärtsgang möglich.

Die Höhe der Standübersetzungen, und damit die Höhe der Getriebeübersetzungen, ist prinzipiell frei wählbar. Gemäß einem Ausführungsbeispiel sind bevorzugte Standübersetzungen des Hauptsystems für den ersten Planetensatz PS1 -2,404, für den zweiten Planetensatz PS2 -1,953, für den dritten Planetensatz PS3 -2,191 und für die Stirnradstufe STS1 (ST1 a-ST1 b) 3,235, für die zweite Stirnradstufe STS2 (ST2a-ST2b) 1,000 und für die in den in den Figuren 9 bis 12 gezeigten Ausführungsvarianten mit drei Stirnradstufen für die dritte Stirnradstufe STS3 (ST3a-ST3b) 1,000 sowie für die vierte Stirnradstufe STS4 (ST4a-ST4b) 1,000. Alle in den Figuren 1 und 3 bis 14 gezeigten Ausführungsbeispiele ergeben wirkungsgleiche Getriebevarianten, welche dieselbe Schaltmatrix verwenden können.

Im Folgenden sind in den Figuren 4 bis 8 mögliche Anordnungsvarianten und Verblockungsvarianten des in Fig. 2 gezeigten Mehrstufengetriebes 120 dargestellt. Die räumliche Anordnung der Schaltelemente K1, K2, K3, K4, B1, B2 des in Fig. 2 dargestellten Ausführungsbeispiels eines Mehrstufengetriebes 120 kann innerhalb des Mehrstufengetriebes 120 im Prinzip beliebig sein und wird nur durch die Abmessungen und die äußere Formgebung des Getriebegehäuses GG begrenzt. Entsprechend sind in den folgenden Figuren beispielhaft Bauteil-Anordnungsvarianten des Mehrstufengetriebes 120 gemäß Fig. 2 dargestellt, wobei alle kinematischen Kupplungen der Planetenradsätze, Stirnradstufen, Schaltelemente und Wellen, beziehungsweise Verbindungselemente, untereinander unverändert aus Fig. 2 übernommen sind.

Fig. 4 zeigt eine Verblockungsvariante des bereits anhand von Fig. 2 beschriebenen ersten Hauptsystems eines Mehrstufengetriebes 120 gemäß einem Ausführungsbeispiel der vorliegenden Erfindung.

Das in Fig. 4 dargestellte Getriebeschema entspricht dem in Fig. 2 dargestellten Getriebeschema eines Mehrstufengetriebes 120, aus welchem sich mehrere wirkungsgleiche Getriebevarianten ableiten lassen, wobei für das dritte Schaltelement K3 und die Kopplung des zweiten Planetenradsatzes PS2 eine weitere wirkungsgleiche Anordnungsvariante gezeigt ist.

Das dritte Schaltelement K3 der sechs Schaltelemente K1, K2, K3, K4, B1, B2 ist im Kraftfluss zwischen dem Steg ST2 des zweiten Planetenradsatzes PS2 und dem neunten Verbindungselement 9 angeordnet. Somit ergibt sich bei geschlossener Kupplung K3 eine verdrehfeste Verbindung zwischen dem Steg ST2 des zweiten Planetenradsatzes PS2 und dem Hohlrad H02 des zweiten Planetenradsatzes PS2.

Abgesehen von der in Fig. 2 gezeigten Kopplung von Sonne S02 und Steg ST2 des zweiten Planetenradsatzes PS2 mittels dem dritten Schaltelement K3 beziehungsweise der Kupplung K3, welche in Fig. 4 wirkungsgleich durch eine Kopplung von Steg ST2 und Hohlrad H02 des zweiten Planetenradsatzes PS2 mittels dem dritten Schaltelement K3 beziehungsweise der Kupplung K3 ersetzt wird, entspricht das in Fig. 4 dargestellte Getriebeschema dem in Fig. 2 dargestellten Getriebeschema eines Mehrstufengetriebes.

Fig. 5 zeigt eine Übersicht über Verblockungsvarianten des bereits anhand von Fig. 2 beschriebenen ersten Hauptsystems eines Mehrstufengetriebes gemäß unterschiedlicher Ausführungsbeispiele der vorliegenden Erfindung.

Das in Fig. 5 dargestellte Getriebeschema entspricht dem in Fig. 2 dargestellten Getriebeschema eines Mehrstufengetriebes 120, aus welchem sich mehrere wirkungsgleiche Getriebevarianten ableiten lassen, wobei für das erste Schaltelement K1, beziehungsweise die Kupplung K1, drei weitere wirkungsgleiche Anordnungsvarianten und für das vierte Schaltelement K4, beziehungsweise die Kupplung K4, eine weitere Anordnungsvariante gezeigt ist.

Die drei Anordnungsvarianten für die Kupplung K1 sind in Fig. 5 mit A1, A2, A3 bezeichnet, die Anordnungsvariante für die Kupplung K4 ist mit A4 bezeichnet.

Eine erste Anordnungsvariante A1 der Kupplung K1 ist eine Anordnung der Kupplung K1 auf dem zweiten Verbindungselement 2 zwischen dem Sonnenrad SO1 des ersten Planetenradsatzes und dem dritten und vierten Verbindungselement 3, 4. In der ersten Anordnungsvariante A1 ist das erste Schaltelement K1 im Kraftfluss zwischen dem Hohlrad H03 des dritten Planetenradsatzes PS2, dem ersten Stirnrad ST2a der zweiten Stirnradstufe STS2 und dem Sonnenrad SO1 des ersten Planetenradsatzes PS1 angeordnet.

Eine zweite Anordnungsvariante A2 der Kupplung K1 ist eine Anordnung der Kupplung K1 auf dem fünften Verbindungselement 5 zwischen dem Hohlrad HO1 des ersten Planetenradsatzes und dem ersten Stirnrad ST1 a des ersten Stirnradsatzes STS1. In der zweiten Anordnungsvariante A2 ist das erste Schaltelement K1 im Kraftfluss zwischen einem Hohlrad HO1 des ersten Planetenradsatzes PS1 und einem ersten Stirnrad ST1 a der ersten Stirnradstufe STS1 angeordnet.

Eine dritte Anordnungsvariante A3 der Kupplung K1 ist eine Anordnung der Kupplung K1 auf dem sechsten Verbindungselement 6 zwischen dem zweiten Stirnrad ST2b der zweiten Stirnradstufe STS2 und der Abtriebswelle AB. In der dritten Anordnungsvariante A3 ist das erste Schaltelement K1 im Kraftfluss zwischen einem zweiten Stirnrad ST2b der zweiten Stirnradstufe STS2 und der Abtriebswelle AB angeordnet.

In einer Anordnungsvariante A4 der Kupplung K4 weist das dritte Verbindungselement 3 die Kupplung K4 auf. In der Anordnungsvariante A4 der Kupplung K4 ist das vierte Schaltelement K4 im Kraftfluss zwischen dem gemeinsamen Verbindungspunkt des zweiten, dritten und vierten Verbindungselements 2, 3, 4 und dem ersten Stirnrad ST1 a der ersten Stirnradstufe STS1 angeordnet. Bei geöffneter Kupplung K4 in der Anordnungsvariante A4 wird das erste Stirnrad ST1 a der ersten Stirnradstufe STS1 von der Verbindung von Sonnenrad SO1 des ersten Planetenradsatzes PS1 und dem Hohlrad H03 des dritten Planetenradsatzes PS3 entkoppelt.

Wenn die Kupplung K1 in einer ersten Anordnungsvariante A1 im zweiten Verbindungselement 2 angeordnet ist, so stellt das siebte Verbindungselement 7 eine verdrehfeste Verbindung zwischen der Antriebswelle AN und dem Steg ST1 des ersten Planetenradsatzes PS1 her und das Sonnenrad SO1 des ersten Planetenradsatzes ist über die Kupplung K1 mit dem ersten Stirnrad ST1 a der ersten Stirnradstufe STS1, dem Hohlrad H03 des dritten Planetenradsatzes PS3 sowie über die Kupplung K2 mit dem Steg ST2 des zweiten Planetenradsatzes PS2 koppelbar. Dabei sind alle acht Kombinationen der in Fig. 2 offenbarten Position für die Kupplung K1 und der drei Anordnungsvarianten A1, A2, A3 für die Kupplung K1 mit der in Fig. 2 offenbarten Position für die Kupplung K4 und der Anordnungsvariante A4 für die Kupplung K4 möglich. Die aufgezeigten Anordnungsvarianten sind wirkungsgleich mit der in Fig. 4 offenbarten Anordnungs- und Verkoppelungsvariante für die dritte Kupplung K3 kombinierbar. In den folgenden Figuren 5 bis 8 ist jeweils eine der möglichen Anordnungsvarianten A1, A2, A3, A4 für die Kupplungen K1 respektive K4 gezeigt.

Aus dem ersten Hauptsystem lässt sich durch Vertauschen der Radsätze PS2 und PS§ ein weiteres mögliches Getriebekonzept ableiten, welches als zweites Hauptsystem bezeichnet in Fig. 6 dargestellt ist.

Fig. 6 zeigt eine Darstellung eines lastschaltbaren Mehrstufengetriebes gemäß einem Ausführungsbeispiel der vorliegenden Erfindung. Das Ausführungsbeispiel zeigt ein zweites Hauptsystem eines Mehrstufengetriebes 120 gemäß der beschriebenen Erfindung. Bei dem lastschaltbaren Mehrstufengetriebe 120 kann es sich um das anhand von Fig. 1 gezeigte Mehrstufengetriebe 120 handeln. Das Mehrstufengetriebe 120, auch Planetenlastschaltgetriebes genannt, ist gemäß diesem Ausführungsbeispiel als ein 9-Gang-Mehrstufengetriebe realisiert.

Die Kopplungen der einzelnen Elemente der drei Planetenradsätze PS1, PS2, PS3 untereinander, zu den beiden Stirnradstufen STS1, STS2 und zur Antriebswelle AN und zur Abtriebswelle AB entsprechen dem in Fig. 2 gezeigten Ausführungsbeispiel, jedoch wurde die Position der zweiten und der dritten Planetenradstufe PS2, PS3 vertauscht, wodurch sich eine geänderte räumliche Anordnung der genannten Komponenten und der Verbindungselemente ergibt.

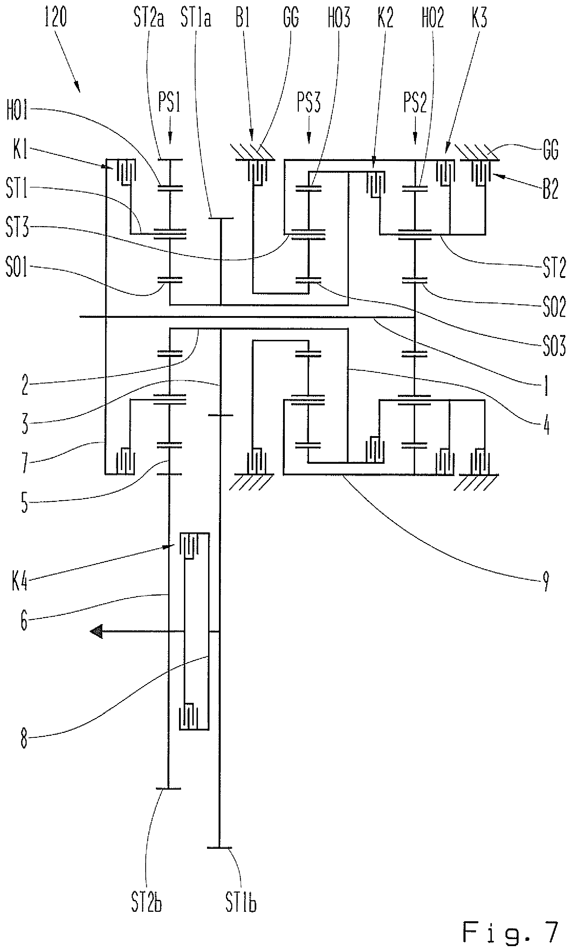

Fig. 7 zeigt eine Verblockungsvariante des bereits anhand von Fig. 6 beschriebenen zweiten Hauptsystems eines Mehrstufengetriebes 120 gemäß einem Ausführungsbeispiel der vorliegenden Erfindung.

Es ist analog zum ersten Hauptsystem möglich, die Verblockung des zweiten Planetenradsatzes PS2 durch die Kupplung K3 (Koppelung von Sonne und Steg in Fig. 6) durch eine Koppelung von Steg und Hohlrad zu ersetzen (Kupplung K3 in Fig. 7). Auf welche Weise ein Planetenradsatz verblockt wird, ist für die Funktion eines Getriebesystems nicht relevant. Wenn es die Bindbarkeit zulässt, ist auch eine Verblockung von Sonne und Hohlrad möglich.

Das in Fig. 7 dargestellte Getriebeschema entspricht dem in Fig. 6 dargestellten Getriebeschema eines Mehrstufengetriebes 120, aus welchem sich mehrere wirkungsgleiche Getriebevarianten ableiten lassen, wobei für das dritte Schaltelement K3 und die Kopplung des zweiten Planetenradsatzes PS2 eine weitere wirkungsgleiche Anordnungsvariante gezeigt ist.

Das dritte Schaltelement K3 der sechs Schaltelemente K1, K2, K3, K4, B1, B2 ist im Kraftfluss zwischen dem Steg ST2 des zweiten Planetenradsatzes PS2 und dem neunten Verbindungselement 9 angeordnet. Somit ergibt sich bei geschlossener Kupplung eine verdrehfeste Verbindung zwischen dem Steg ST2 des zweiten Planetenradsatzes PS2 und dem Hohlrad H02 des zweiten Planetenradsatzes PS2.

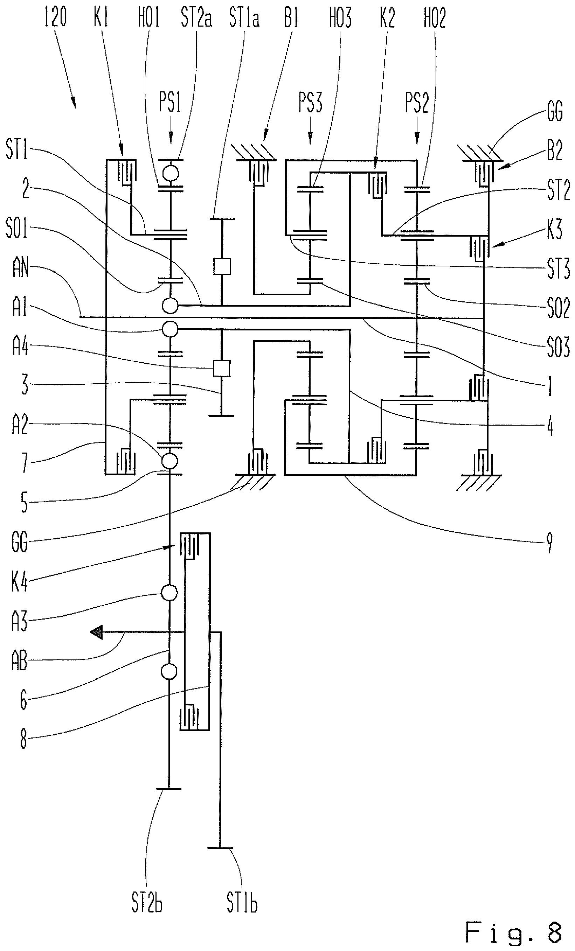

Fig. 8 zeigt eine Übersicht über Verblockungsvarianten des bereits anhand von Fig. 6 beschriebenen zweiten Hauptsystems eines Mehrstufengetriebes 120 gemäß unterschiedlicher Ausführungsbeispiele der vorliegenden Erfindung. Da sich zwischen dem ersten und dem zweiten Hauptsystem nur die Anordnung des zweiten und dritten Planetenradsatzes geändert hat, aber die Bindungen gleich geblieben sind, entsprechen die Verblockungsvarianten den bereits in Fig. 5 dargestellten Verblockungsvarianten.

Aus dem in Fig. 6 gezeigten zweiten Hauptsystem lassen sich mehrere wirkungsgleiche Getriebevarianten ableiten, wobei für das erste Schaltelement K1, drei weitere wirkungsgleiche Anordnungsvarianten und für das vierte Schaltelement K4 eine weitere Anordnungsvariante gezeigt ist.

Die drei Anordnungsvarianten für das Schaltelement K1 sind in Fig. 8 mit A1, A2, A3 bezeichnet, die Anordnungsvariante für die Kupplung K4 ist mit A4 bezeichnet. In einer ersten Anordnungsvariante A1 des zweiten Hauptsystems weist das zweite Verbindungselement 2 das erste Schaltelement K1 auf. In einer zweiten Anordnungsvariante A2 des zweiten Hauptsystems weist das fünfte Verbindungselement 5 das erste Schaltelement K1 auf. In einer dritten Anordnungsvariante A3 des zweiten Hauptsystems weist das sechste Verbindungselement 6 das erste Schaltelement K1 auf. In einer vierten Anordnungsvariante A4 des zweiten Hauptsystems weist das dritte Verbindungselement 3 das vierte Schaltelement K4 auf. Die Anordnungsvarianten des ersten Schaltelements K1 sind mi den Anordnungsvarianten des vierten Schaltelements K4 frei kombinierbar. Die gezeigten und dargestellten Anordnungsvarianten für das erste Schaltelement K1 und für das vierte Schaltelement K4 sind mit der hier dargestellten Anordnungsvariante für das dritte Schaltelement K3 und mit der in Fig. 7 gezeigten Anordnungsvariante für das dritte Schaltelement K3 kombinierbar.

Das in den Figuren 2 und 4 bis 8 gezeigte lastschaltbare Mehrstufengetriebe 120 kann wirkungsgleich durch eine Anordnung des ersten Planetenradsatzes PS1 auf der Abtriebswelle AB realisiert werden. Die folgenden Figuren 9 bis 12 zeigen zwei Anordnungsvarianten und mögliche alternative Verblockungsvarianten eines erfindungsgemäßen Mehrstufengetriebes 120 mit einem Planetenradsatz auf der Abtriebswelle AB. Ein solches Mehrstufengetriebe 120 wird im Folgenden als drittes Hauptsystem bezeichnet.

Fig. 9 zeigt ein Getriebeschemata eines lastschaltbaren Mehrstufengetriebes 120 und basiert auf dem genannten dritten Hauptsystem eines Mehrstufengetriebes 120. Bei dem lastschaltbaren Mehrstufengetriebe 120 kann es sich um das anhand von Fig. 1 gezeigte Mehrstufengetriebe 120 handeln. Das Mehrstufengetriebe 120, auch Planetenlastschaltgetriebe genannt, ist gemäß diesem Ausführungsbeispiel als ein 9-Gang-Mehrstufengetriebe realisiert.

Im Vergleich zu dem in den Figuren 2 und 4 bis 8 gezeigten Ausführungsbeispielen eines Mehrstufengetriebes 120 weist das in Fig. 9 gezeigte Mehrstufengetriebe 120 keine erste Stirnradstufe STS1, dafür jedoch neben der bereits anhand von Fig. 2 beschriebenen zweiten Stirnradstufe STS2 zwei zusätzliche Stirnradstufen STS3, STS4 auf. Somit werden anstelle von zwei Stirnradstufen STS1, STS2, wie beispielsweise in Fig. 2 für das erste Hauptsystem gezeigt, nun drei Stirnradstufen STS2, STS3, STS4 eingesetzt werden. In diesem Ausführungsbeispiel ist der erste Planetenradsatz PS1 auf der Abtriebswelle AB positioniert.

Das in Fig. 9 gezeigte Mehrstufengetriebe 120 umfasst zwei parallele Wellenstränge WS1, WS2, sechs Schaltelemente K1, K2, K3, K4, B1, B2, drei Stirnradstufen STS1, STS3, STS4 und drei Planetenradsätze PS1, PS2, PS3, die alle in einem Gehäuse GG des Planetenlastschaltgetriebes 120 angeordnet sind. Alle drei Planetenradsätze PS1, PS2, PS3 sind in diesem Ausführungsbeispiel als einfache Minus-Planetenradsätze ausgebildet, deren jeweiliges Hohlrad HO1, H02, H03 bei festgehaltenem Steg ST1, ST2, ST3 in zum Sonnenrad SO1, S02, S03 entgegengesetzter Richtung rotiert. Der zweite und dritte Planetenradsatz PS2, PS3 sind in axialer Richtung in der Reihenfolge "PS2, PS3" koaxial hintereinander auf dem ersten Wellenstrang WS1 der zwei parallelen Wellenstränge WS1, WS2 angeordnet.

Ein erstes Stirnrad ST4a der vierten Stirnradstufe STS4, ein erstes Stirnrad ST3a einer dritten Stirnradstufe STS3 der drei Stirnradstufen STS2, STS3, STS4 und ein erstes Stirnrad ST1 a einer ersten Stirnradstufe STS1 der drei Stirnradstufen STS1, STS3, STS4 sind koaxial hintereinander auf dem ersten Wellenstrang WS1 vor dem zweiten Planetenradsatz PS2 angeordnet. Somit ergibt sich eine Reihenfolge von "ST4a, ST3a, ST1 a, PS2, PS3".

Die Antriebswelle AN ist auf dem ersten Wellenstrang WS1 angeordnet, die Abtriebswelle AB ist auf einem zweiten Wellenstrang WS2 der zwei parallelen Wellenstränge WS1, WS2 angeordnet. Weiterhin sind die beiden Wellenstränge WS1, WS2 über die drei Stirnradstufen STS1, STS3, STS4 miteinander verbunden.

Die Schaltelemente K1, K2, K3, K4 sind als Kupplungen ausgebildet, die zwei Schaltelemente B1, B2 sind als Bremsen ausgebildet und werden im Folgenden teilweise auch als solche bezeichnet. Durch ein selektives Eingreifen der sechs Schaltelemente K1, K2, K3, K4, B1, B2 sind verschiedene Übersetzungsverhältnisse zwischen der Antriebswelle AN und der Abtriebswelle AB bewirkbar. Auf diese Weise sind zumindest neun Vorwärtsgänge und zumindest ein Rückwärtsgang realisierbar.

Im Folgenden wird eine Kopplung der einzelnen Elemente der drei Planetenradsätze PS1, PS2, PS3 untereinander, zu den drei Stirnradstufen STS1, STS3, STS4 und zur Antriebswelle AN und zur Abtriebswelle AB beschrieben.

Das Planetenlastschaltgetriebe 120 weist zumindest neun Verbindungselemente auf, die mit 1, 3, 4, 8, 9, 10, 11, 12 13, 14 bezeichnet sind. Die Verbindungselemente 1, 3, 4, 8, 9, 10, 11, 12 13, 14 können als Wellen ausgebildet sein, wobei innerhalb der Verbindungselemente auch Schaltelemente, insbesondere Kupplungen, angeordnet sein können, , wie es nachfolgend noch detaillierter ausgeführt wird.

Wie in Fig. 9 gezeigt, sind ein Sonnenrad S02 eines zweiten Planetenradsatzes PS2 der drei Planetenradsätze PS1, PS2, PS3 und die Antriebswelle AN verdrehfest miteinander verbunden und bilden ein erstes Verbindungselement 1. Ein Hohlrad H03 eines dritten Planetenradsatzes PS3 der drei Planetenradsätze PS1, PS2, PS3 und der Steg ST2 des zweiten Planetenradsatzes PS2 sind über das Schaltelement K2 miteinander verbunden. Ein Hohlrad H03 des dritten Planetenradsatzes PS3 ist mit dem ersten Stirnrad ST1 a der ersten Stirnradstufe STS2 sowie dem ersten Stirnrad ST3a der dritten Stirnradstufe STS3 über ein drittes, viertes respektive zehntes Verbindungselement 3, 4, 10 verbunden. Das dritte, vierte und zehnte Verbindungselement 3, 4, 10 weisen einen gemeinsamen Verbindungspunkt auf. Das dritte Verbindungselement 3 ist ferner mit dem ersten Stirnrad ST1 a der ersten Stirnradstufe STS1 verbunden. Das vierte Verbindungselement 4 ist ferner mit dem Hohlrad H03 des dritten Planetenradsatzes PS3 verbunden. Das zehnte Verbindungselement 10 ist ferner mit dem ersten Stirnrad ST3a der dritten Stirnradstufe STS3 verbunden. Ein zweites Stirnrad ST1 b der ersten Stirnradstufe STS1 und die Abtriebswelle AB sind verbunden und bilden ein achtes Verbindungselement 8.

Ein Hohlrad HO1 des ersten Planetenradsatzes PS1 und die Abtriebswelle AB sind verbunden und bilden ein elftes Verbindungselement. Ein Steg ST1 des ersten Planetenradsatzes PS1 und ein zweites Stirnrad ST4b der vierten Stirnradstufe STS4 sind verbunden und bilden ein zwölftes Verbindungselement 12. Ein Sonnenrad SO1 des ersten Planetenradsatzes PS1 und ein zweites Stirnrad ST3b der dritten Stirnradstufe STS3 sind verbunden und bilden ein dreizehntes Verbindungselement 13. Die Antriebswelle AN und ein erstes Stirnrad ST4a der vierten Stirnradstufe STS4 sind verbunden und bilden ein vierzehntes Verbindungselement. Das vierzehnte Verbindungselement 14 weist das erste Schaltelement K1 auf. In dem achten Verbindungselement 8 ist das vierte Schaltelement K4 angeordnet.

Ein drittes Schaltelement K3 der sechs Schaltelemente K1, K2, K3, K4, B1, B2 ist zwischen dem Sonnenrad S02 des zweiten Planetenradsatzes PS2 und dem Steg ST2 des zweiten Planetenradsatzes PS2 angeordnet. Das achte Verbindungselement 8 weist ein viertes Schaltelement K4 der sechs Schaltelemente K1, K2, K3, K4, B1, B2 auf. Ein fünftes Schaltelement B1 der sechs Schaltelemente K1, K2, K3, K4, B1, B2 ist im Kraftfluss zwischen dem Sonnenrad S03 des dritten Planetenradsatzes PS3 und einem Getriebegehäuse GG angeordnet. Ein sechstes Schaltelement B2 der sechs Schaltelemente K1, K2, K3, K4, B1, B2 ist im Kraftfluss zwischen dem Steg ST2 des zweiten Planetenradsatzes PS2 und dem Getriebegehäuse GG angeordnet.

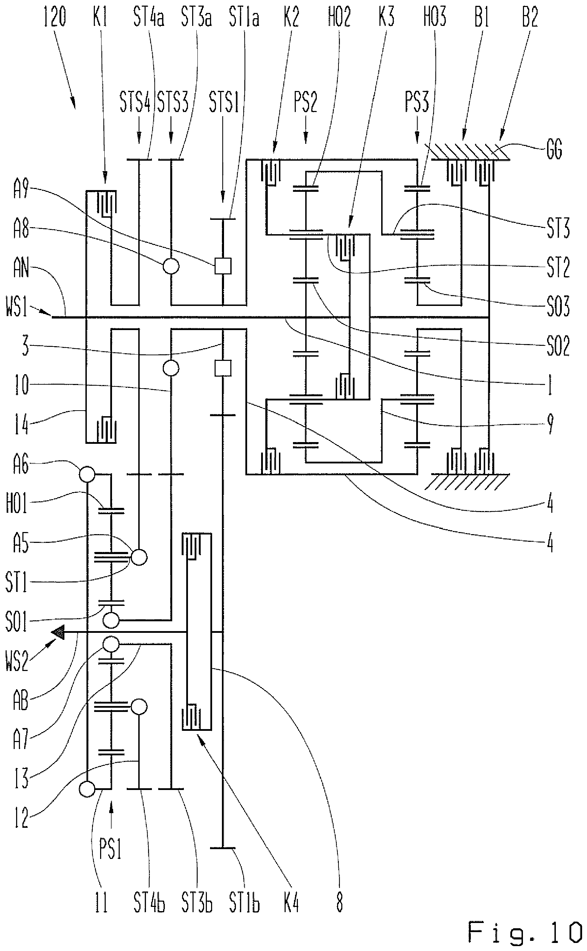

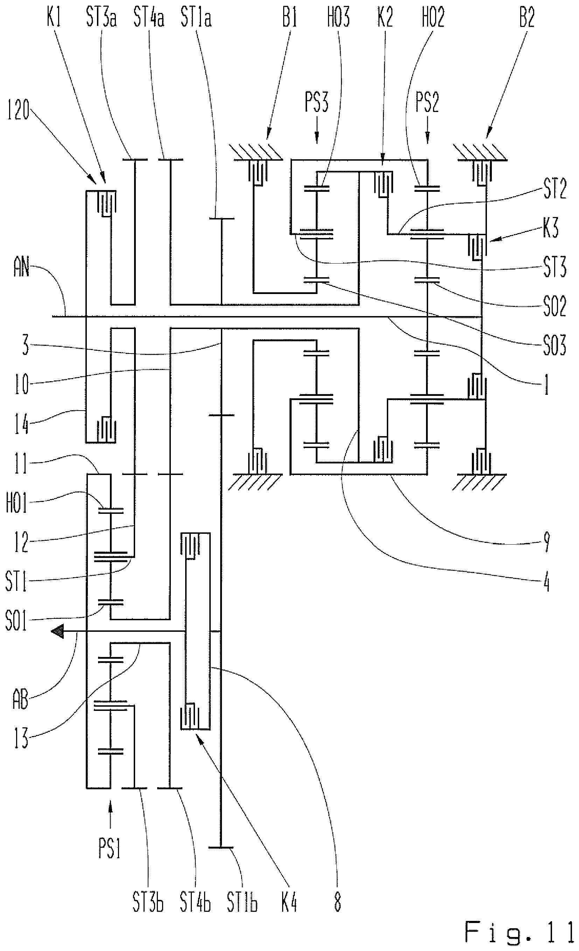

Um axialen Bauraum zu sparen, kann ein Radsatz auf der Abtriebswelle AB positioniert werden. Hierfür bietet sich vor allen Dingen der Radsatz PS1 an. Allerdings wird hierfür eine Stirnradstufe zusätzlich benötigt. In den Figuren 9 bis 12 ist diese Möglichkeit für das zweite Hauptsystem dargestellt. Fig. 9 zeigt ein Getriebeschema vom dritten Hauptsystem mit dem ersten Planetenradsatz PS1 auf der Abtriebswelle AB. Auch bei diesem System sind wieder die beschriebenen Anordnungsvarianten möglich, wie es in Figur 10 dargestellt ist. Figur 11 zeigt dann eine alternative Anordnung des zweiten und dritten Planetenradsatzes PS2, PS3 - entsprechend zu Fig. 6 - mit dem ersten Planetenradsatz PS1 auf der Abtriebswelle AB.

Fig. 10 zeigt Verblockungsvarianten des des bereits anhand von Fig. 9 beschriebenen dritten Hauptsystems des Mehrstufengetriebes 120. Dabei handelt es sich um zu dem anhand von Fig. 9 beschriebenen dritten Hauptsystem wirkungsgleiche Verblockungsvarianten des Mehrstufengetriebes 120.

Das in Fig. 10 dargestellte Getriebeschema entspricht dem in Fig. 9 dargestellten Getriebeschema eines Mehrstufengetriebes 120, aus welchem sich mehrere wirkungsgleiche Getriebevarianten ableiten lassen, wobei es für das erste Schaltelement K1, beziehungsweise die Kupplung K1, vier weitere wirkungsgleiche Anordnungsvarianten gibt und für das vierte Schaltelement K4, beziehungsweise die Kupplung K4, eine weitere Anordnungsvariante möglich ist. Die vier Anordnungsvarianten für die Kupplung K1 sind in Fig. 10 mit A5, A6, A7, A8 bezeichnet, die Anordnungsvariante für die Kupplung K4 ist mit A9 bezeichnet.

In einer ersten Anordnungsvariante A5 ist die Kupplung K1 im zwölften Verbindungselement 12 zwischen dem zweiten Stirnrad ST4b des vierten Stirnradsatzes STS4 und dem Steg ST1 des ersten Planetenradsatzes PS1 angeordnet.

In einer zweiten Anordnungsvariante A6 ist die Kupplung K1 im elften Verbindungselement 11 zwischen dem Hohlrad HO1 des ersten Planetenradsatzes PS1 und der Abtriebswelle AB angeordnet.

In einer dritten Anordnungsvariante A7 ist die Kupplung K1 im zwölften Verbindungselement 12 zwischen dem zweiten Stirnrad ST3b der dritten Stirnradstufe STS3 und dem Sonnenrad SO1 des ersten Planetenradsatzes PS1 angeordnet.

In einer vierten Anordnungsvariante A8 ist die Kupplung K1 im neunten Verbindungselement zwischen dem ersten Stirnrad ST4a der vierten Stirnradstufe STS4 und dem gemeinsamen Verbindungspunkt des vierten, neunten und vierzehnten Verbindungselements angeordnet.

Für die Kupplung K4 ergibt sich neben der Anordnungsvariante im zehnten Verbindungselement 10 zwischen dem ersten Stirnrad ST1a der ersten Stirnradstufe STS1 und dem gemeinsamen Verbindungspunkt des dritten, vierten und zehnten Verbindungselements 3, 4, 10 eine weitere Anordnungsvariante A9. Dabei ist die Kupplung K4 im dritten Verbindungselement 3 zwischen dem ersten Stirnrad ST1 a der ersten Stirnradstufe STS1 und dem gemeinsamen Verbindungspunkt des dritten, vierten und zehnten Verbindungselements 3, 4, 10 angeordnet.

Figur 10 zeigt eine der zehn möglichen Anordnungsvarianten für die Kupplungen K1, K4, gemäß denen jede der fünf Anordnungsvarianten für die Kupplung K1 mit den beiden Anordnungsvarianten für die Kupplung K4 kombiniert werden kann.

Somit zeigt Fig. 10 wirkungsgleiche Getriebevarianten beziehungsweise Getriebeschemata der Anordnungsvarianten für die Kupplungen K1, K4. Wie bei den ersten und zweiten Hauptsystemen mit allen Planetensätzen auf der Antriebswelle AN, gezeigt in den Figuren 2 und 3 bis 8, ist auch bei den Varianten des dritten Hauptsystems mit einem Radsatz auf der Abtriebswelle AB eine ganze Reihe an Getriebevarianten möglich. Diese sind größtenteils identisch und immer wirkungsgleich mit den Getriebevarianten des ersten Hauptsystems. Allerdings kommt aufgrund der Umpositionierung für die Kupplung K1 eine zusätzliche Anordnungsvariante hinzu. Auch hier sind analog zum ersten Hauptsystem für die Kupplungen K1, K4 weitere Anordnungen möglich, ohne dass sich die Funktion des Getriebes 120 verändert. Diese Anordnungsmöglichkeiten sind in Fig. 10 dargestellt. So ergeben sich für die Kupplung K1 vier weitere Anordnungsmöglichkeiten A5, A6, A7, A8. Für die Kupplung K4 ergibt sich eine weitere Anordnungsmöglichkeit A9.

Fig. 11 zeigt ein weiteres nicht beanspruchtes Getriebeschema des Mehrstufengetriebes 120. Dabei ist die erste Planetenradstufe PS1 auf der Abtriebswelle AB angeordnet.

Im Vergleich zu dem in Fig. 9 und 10 gezeigten Beispiel wurde die Anordnung des zweiten und des dritten Planetenradsatzes variiert. Alle Getriebeelemente, Verbindungselemente, Wellen, verdrehfeste Verbindungen, Schaltelemente und Anordnungsvarianten sind zu dem in Fig. 9 und 10 gezeigten Ausführungsbeispiel identisch. Wie bereits in den Figuren 6 bis 8 gezeigt ergibt sich insbesondere für das erste, vierte und neunte Verbindungselement 1, 4, 9 sowie für das zweite und das fünfte Schaltelement K2, B1 eine im Vergleich zu dem in Fig. 9 gezeigten Ausführungsbeispiel eine geänderte räumliche Anordnung. Die exakte geometrische Lage der Getriebeelemente (Kupplungen, Radsätze, Stirnräder etc.) ist dabei bei sämtlichen Varianten flexibel, so können einzelne Planetenradsätze, Stirnräder oder Kupplungen auch vertauscht beziehungsweise verschoben werden, solange es die Bindbarkeit zulässt.

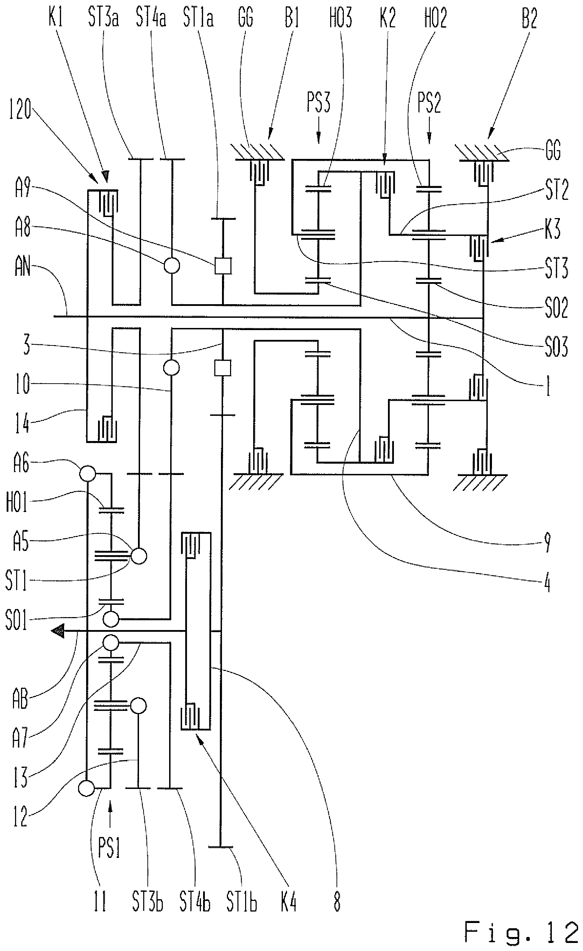

Fig. 12 zeigt Verblockungsvarianten des in Fig. 11 gezeigten nicht beanspruchten Beispiels. Das in Fig. 12 dargestellte Getriebeschema entspricht dem in Fig. 11 dargestellten Getriebeschema eines Mehrstufengetriebes 120, aus welchem sich mehrere wirkungsgleiche Getriebevarianten ableiten lassen, wobei es für das erste Schaltelement K1, beziehungsweise die Kupplung K1, vier weitere wirkungsgleiche Anordnungsvarianten gibt und für das vierte Schaltelement K4, beziehungsweise die Kupplung K4, eine weitere Anordnungsvariante möglich ist. Die vier Anordnungsvarianten für die Kupplung K1 sind in Fig. 10 mit A5, A6, A7, A8 bezeichnet, die Anordnungsvariante für die Kupplung K4 ist mit A9 bezeichnet. Die Anordnung der wirkungsgleichen Verblockungsvarianten entspricht den in Fig. 10 gezeigten Verblockungsvarianten. So kann das erste Schaltelement wirkungsgleich als für das erste Schaltelement gezeigte Anordnungsvariante im vierzehnten Verbindungselement 14, mit einer als A5 bezeichneten Anordnungsvariante im zwölften Verbindungselement 12, mit einer als A6 bezeichneten Anordnungsvariante im elften Verbindungselement 11, mit einer als A7 bezeichneten Anordnungsvariante im dreizehnten Verbindungselement 13 sowie mit einer als A8 bezeichneten Anordnungsvariante im zehnten Verbindungselement 10 angeordnet sein. Das vierte Schaltelement K4 kann neben dem gezeigten Ausführungsbeispiel im achten Verbindungselement 8 als neunte Anordnungsvariante A9 im dritten Verbindungselement 3 angeordnet sein.

In den Figuren 13 und 14 wird eine Hybridisierung eines erfindungsgemäßen Mehrstufengetriebes gezeigt. Auf jeder Welle eines Mehrstufengetriebes gemäß einem der beschriebenen Ausführungsbeispiele kann prinzipiell eine elektrische Maschine oder sonstige Kraft-/Leistungsquelle angeordnet werden.

Fig. 13 zeigt eine schematische Darstellung eines lastschaltbaren Mehrstufengetriebes 120, ausgeführt als erstes Hauptsystem, mit einer Leistungsquelle EM gemäß einem Ausführungsbeispiel der vorliegenden Erfindung. Die Leistungsquelle EM ist gemäß diesem Ausführungsbeispiel als eine elektrische Maschine EM ausgeführt. Somit handelt es sich um eine Hybridisierung mit einer elektrischen Maschine EM, die direkt auf der Antriebswelle AN des anhand von Fig. 2 beschriebenen und als erstes Hauptsystem ausgeführten Mehrstufengetriebes 120.

Das aus Fig. 2 bekannte Mehrstufengetriebe 120 wird gemäß diesem Ausführungsbeispiel um eine elektrische Maschine EM und eine zusätzliche Kupplung K0 auf der Antriebswelle AN erweitert. Im ersten Wellenstrang WS1 wird zusätzlich die elektrische Maschine EM als Lastquelle und die Kupplung K0 zwischen einem die Antriebswelle AN antreibenden Verbrennungsmotor, wie er beispielsweise in Fig. 1 gezeigt ist, und der elektrischen Maschine EM angeordnet. In axialer Richtung sind auf dem ersten Wellenstrang WS1 die Kupplung K0, die elektrische Maschine EM die zwei Stirnradstufen STS1, STS2 und die drei Planetenradsätze PS1, PS2, PS3 in der Reihenfolge "K0, EM, PS1/STS2, STS1, PS2, PS3" koaxial hintereinander angeordnet. Die elektrische Maschine wirkt direkt auf die Antriebswelle. Die Hybridisierung ist mit allen in den Figuren 1 bis 12 gezeigten und beschriebenen Ausführungsbeispielen möglich. Die Verknüpfung der elektrischen Maschine EM mit der Antriebswelle AN stellt eine beispielhafte Ausführungsvariante dar, prinzipiell kann eine elektrische Maschine oder sonstige Kraftquelle oder Leistungsquelle, auf jeder Welle eines erfindungsgemäßen Planetenlastschaltgetriebes angeordnet werden.

Wird, wie in Fig. 13 gezeigt, zusätzlich zur elektrischen Maschine EM noch die zusätzliche Kupplung K0 zwischen einem Verbrennungsmotor, wie er beispielsweise in Fig. 1 gezeigt ist, und der elektrischen Maschine EM platziert, ist es möglich, alle Gänge, wie sie beispielsweise anhand von Fig. 3 beschrieben sind, sowohl vorwärts als auch rückwärts rein elektrisch zu fahren. Dazu wird der Verbrennungsmotor durch die geöffnete Kupplung K0 abgekoppelt.

Neben der in Fig. 13 gezeigten Hybridisierung mit einer elektrischen Maschine EM direkt auf der Antriebswelle AN ist auch eine Hybridisierung mit einer elektrischen Maschine EM achsparallel zur Antriebswelle AN denkbar, wie es anhand der Fig. 14 beschrieben ist.

Fig. 14 zeigt eine schematische Darstellung eines lastschaltbaren Mehrstufengetriebes 120 mit einer Leistungsquelle EM gemäß einem Ausführungsbeispiel der vorliegenden Erfindung. Die Leistungsquelle EM ist entsprechend zu dem anhand von Fig. 13 beschriebenen Ausführungsbeispiel als eine elektrische Maschine EM ausgeführt. Somit handelt es sich um eine Hybridisierung mit einer elektrischen Maschine EM, die achsparallel zur Antriebswelle AN des anhand von Fig. 2 beschriebenen Ausführungsbeispiels eines Mehrstufengetriebes 120 angeordnet ist.

Die elektrische Maschine EM wird in diesem Ausführungsbeispiel im Vergleich zu dem in Fig. 13 gezeigten Ausführungsbeispiel nicht direkt verdrehfest mit dem ersten Verbindungselement verbunden, sondern über eine fünfte Stirnradstufe STS5 mit dem ersten Verbindungselement gekoppelt. Die elektrische Maschine EM ist achsparallel zu den Wellensträngen auf der dem zweiten Wellenstrang WS2 gegenüberliegenden Seite des ersten Wellenstrangs WS1 angeordnet. Die Anordnung der Planetenradsätze PS1, PS2, PS3 und der Stirnradstufen STS1, STS2 sowie die Verbindungen beziehungsweise Verblockung untereinander entspricht dem in Figur 2 gezeigten Ausführungsbeispiel der vorliegenden Erfindung.

Die im Vorangegangenen beschriebenen Anordnungen der Radsätze und Kupplungen ermöglicht es, das ein Mehrstufengetriebe gemäß dem beschriebenen Konzept auch als Front-Quer-System genutzt werden kann. Dabei kommt das Mehrstufengetriebe mit einer geringen Anzahl an Planetensätzen aus.

Die beschriebenen und in den Figuren gezeigten Ausführungsbeispiele sind nur beispielhaft gewählt. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist. Neben den beispielhaft beschriebenen Ausführungsformen und Ausführungsbeispielen gibt es weitere räumliche Anordnung der Planetensätze und der Schaltelemente an sich sowie zueinander, welche die Funktion des beschriebenen Getriebes nicht beeinflusst.

Insbesondere können sich für alle dargestellten beziehungsweise beschriebenen Ausführungsbeispiele der Getriebefamilie bei gleichem Getriebeschema, je nach Standgetriebeübersetzung der einzelnen Planetensätze, unterschiedliche Gangsprünge ergeben, sodass eine anwendungs- beziehungsweise fahrzeugspezifische Variation ermöglicht wird. Weiterhin ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden. Auf der Antriebsseite oder auf der Abtriebsseite kann erfindungsgemäß ein Achsdifferential und/oder ein Verteilerdifferential angeordnet werden. Das erfindungsgemäße Mehrstufengetriebe kann entsprechend vorteilhaft weitergebildet werden, beispielsweise durch Anordnung eines Torsionsschwingungsdämpfers zwischen Antriebsmotor und Getriebe. Weiterhin kann die Antriebswelle AN durch ein Kupplungselement von einem Antriebsmotor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar ist. Es ist auch möglich, ein derartiges Anfahrelement in Kraftflussrichtung hinter dem Getriebe anzuordnen, wobei in diesem Fall die Antriebswelle AN ständig mit der Kurbelwelle des Antriebsmotors verbunden ist.

Neben der Hybridisierung eines erfindungsgemäßen Mehrstufengetriebes kann in einer weiteren nicht dargestellten Ausführungsform der Erfindung auf jeder Welle, bevorzugt auf der Antriebswelle AN oder der Abtriebswelle AB, eine verschleißfreie Bremse, wie beispielsweise ein hydraulischer oder elektrischer Retarder, angeordnet sein, welche insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle AN oder der Abtriebswelle AB, ein Nebenabtrieb vorgesehen sein.

### Bezugszeichen

- 100: Fahrzeug
- 110: Motor
- 120: Planetenlastschaltgetriebe
- AN: Antriebswelle
- AB: Abtriebswelle
- WS1: erster Wellenstrang
- WS2: zweiter Wellenstrang
- K1: Schaltelement, Kupplung
- K2: Schaltelement, Kupplung
- K3: Schaltelement, Kupplung
- K4: Schaltelement, Kupplung
- B1: Schaltelement, Bremse
- B2: Schaltelement, Bremse
- PS1: erster Planetenradsatz
- PS2: zweiter Planetenradsatz
- PS3: dritter Planetenradsatz
- SO1: Sonnenrad
- SO2: Sonnenrad
- SO3: Sonnenrad
- HO1: Hohlrad
- HO2: Hohlrad
- HO3: Hohlrad
- ST1: Steg
- ST2: Steg
- ST3: Steg
- STS1: erste Stirnradstufe
- STS2: zweite Stirnradstufe
- STS3: dritte Stirnradstufe
- ST1a: erstes Stirnrad
- ST1b: zweites Stirnrad
- ST2a: erstes Stirnrad
- ST2b: zweites Stirnrad
- ST3a: erstes Stirnrad
- ST3b: zweites Stirnrad
- ST4a: erstes Stirnrad
- ST4b: zweites Stirnrad
- 1: erstes Verbindungselement
- 2: zweites Verbindungselement
- 3: drittes Verbindungselement
- 4: viertes Verbindungselement
- 5: fünftes Verbindungselement
- 6: sechstes Verbindungselement
- 7: siebtes Verbindungselement
- 8: achtes Verbindungselement
- 9: neuntes Verbindungselement
- 10: zehntes Verbindungselement
- 11: elftes Verbindungselement
- 12: zwölftes Verbindungselement
- 13: dreizehntes Verbindungselement
- GG: Getriebegehäuse
- EM: Leistungsquelle

## Patentansprüche

1. Lastschaltbares Mehrstufengetriebe (120) in Planetenbauweise zur Anordnung zwischen einer Antriebswelle (AN) und einer Abtriebswelle (AB) für ein Fahrzeug (100), wobei das Mehrstufengetriebe zwei parallele Wellenstränge (WS1, WS2), sechs Schaltelemente (K1, K2, K3, K4, B1, B2), zwei Stirnradstufen (STS1, STS2) und drei Planetenradsätze (PS1, PS2, PS3) aufweist, wobei die Planetenradsätze (PS1, PS2, PS3) jeweils ein Sonnenrad (SO1, SO2, SO3), ein Hohlrad (HO1, HO2, HO3) und einen in einem Steg (ST1, ST2, ST3) zusammengeführten Planetenträger mit mehreren Planetenrädern aufweisen, wobei die beiden Wellenstränge (WS1, WS2) Ober die zwei Stirnradstufen (STS1, STS2) miteinander verbindbar sind, wobei durch ein selektives Eingreifen der sechs Schaltelemente (K1, K2, K3, K4, B1, B2) verschiedene Übersetzungsverhältnisse zwischen der Antriebswelle (AN) und der Abtriebswelle (AB) bewirkbar sind, sodass eine Mehrzahl an Vorwärtsgängen, zumindest neun Vorwärtsgänge, und zumindest ein Rückwärtsgang realisierbar sind, wobei die Antriebswelle (AN) auf einem ersten Wellenstrang (WS1) der zwei parallelen Wellenstränge (WS1, WS2) angeordnet ist,
die Antriebswelle (AB) auf einem zweiten Wellenstrang (WS2) der zwei parallelen Wellenstränge (WS1, WS2) angeordnet ist,
ein Sonnenrad (SO2) eines zweiten Planetenradsatzes (PS2) der drei Planetenradsätze (PS1, PS2, PS3) und die Antriebswelle (AN) verdrehfest miteinander verbunden sind und ein erstes Verbindungselement (1) bilden,
ein Hohlrad (HO2) des zweiten Planetenradsatzes (PS3) und ein Steg (ST3) eines dritten Planetenradsatzes (PS3) der drei Planetenradsätze (PS1, PS2, PS3) miteinander verbunden sind und ein neuntes Verbindungselement (9) bilden,
ein fünftes Schaltelement (B1) der sechs Schaltelemente (K1, K2, K3, K4, B1, B2) im Kraftfluss zwischen einem Sonnenrad (SO3) des dritten Planetenradsatzes (PS3) und einem Getriebegehäuse (GG) angeordnet ist, und
ein sechstes Schaltelement (B2) der sechs Schaltelemente (K1, K2, K3, K4, B1, B2) im Kraftfluss zwischen einem Steg (ST2) des zweiten Planetenradsatzes (PS2) und dem Getriebegehäuse (GG) angeordnet ist, **dadurch gekennzeichnet, dass** die drei Planetenradsätze (PS1, PS2, PS3) auf dem ersten Wellenstrang (WS1) angeordnet sind,
ein Sonnenrad (SO1) eines ersten Planetenradsatzes (PS1) der drei Planetenradsätze (PS1 , PS2, PS3), ein erstes Stirnrad (ST1a) einer ersten Stirnradstufe (STS1) der zumindest zwei Stirnradstufen (STS1 , STS2) und ein Hohlrad (HO3) des dritten Planetenradsatzes (PS3) über ein zweites, drittes und viertes Verbindungselement (2, 3, 4) miteinander verbunden sind , wobei das zweite, dritte und vierte Verbindungselement (2, 3, 4) einen gemeinsamen Verbindungspunkt aufweisen und das zweite Verbindungselement (2) ferner mit dem Sonnenrad (SO1) des ersten Ensatzseite Planetenradsatzes (PS1) verbunden ist, das dritte Verbindungselement (3) ferner mit dem ersten Stirnrad (ST1a) der ersten Stirnradstufe (STS1) verbunden ist und das vierte Verbindungselement (4) ferner mit dem Hohlrad (HO3) des dritten Planetenradsatzes (PS3) verbunden ist,
ein erstes Stirnrad (ST2a) einer zweiten Stirnradstufe (STS2) der zumindest zwei Stirnradstufen (STS1, STS2) und ein Hohlrad (HO1) des ersten Planetenradsatzes (PS1) miteinander verbunden sind und ein fünftes Verbindungselement (5) bilden,
ein zweites Stirnrad (ST2b) der zweiten Stirnradstufe (STS2) und die Abtriebswelle (AB) verbunden sind und ein sechstes Verbindungselement (6) bilden,
ein Steg (ST1) des ersten Planetenradsatzes (PS1) und die Antriebswelle (AN) miteinander verbunden sind und ein siebtes Verbindungselement (7) bilden,
ein zweites Stirnrad (ST1 b) der ersten Stirnradstufe (STS1) und die Abtriebswelle (AB) miteinander verbunden sind und ein achtes Verbindungselement (8) bilden,
wobei
ein zweites Schaltelement (K2) der sechs Schaltelemente (K1, K2, K3, K4, B1, B2) im Kraftfluss zwischen dem vierten Verbindungselement (4) und dem Steg (ST2) des zweiten Planetenradsatzes (PS2) angeordnet,

2. Lastschaltbares Mehrstufengetriebe (120) gemäß Anspruch 1, **dadurch gekennzeichnet, dass** das siebte Verbindungselement (7) ein erstes Schaltelement (K1) der sechs Schaltelemente (K1, K2, K3, K4, B1, B2) aufweist, wobei das erste Schaltelement (K1) im Kraftfluss zwischen der Antriebswelle (AN) und dem Steg (ST1) des ersten Planetenradsatzes (PS1) angeordnet ist.

3. Lastschaltbares Mehrstufengetriebe (120) gemäß Anspruch 1, **dadurch gekennzeichnet, dass** das zweite Verbindungselement (2) ein erstes Schaltelement (K1) der sechs Schaltelemente (K1, K2, K3, K4, B1, B2) aufweist oder das fünfte Verbindungselement (5) das erste Schaltelement (K1) aufweist.

4. Lastschaltbares Mehrstufengetriebe (120) gemäß Anspruch 1, **dadurch gekennzeichnet, dass** das sechste Verbindungselement (6) ein erstes Schaltelement (K1) der sechs Schaltelemente (K1, K2, K3, K4, B1, B2) aufweist, wobei das erste Schaltelement (K1) im Kraftfluss zwischen einem zweiten Stirnrad (ST1 b) der ersten Stirnradstufe (STS1) und der Abtriebswelle (AB) angeordnet ist.

5. Lastschaltbares Mehrstufengetriebe (120) gemäß einem der Ansprüche 1 bis 4, **dadurch gekennzeichnet, dass** ein drittes Schaltelement (K3) der sechs Schaltelemente (K1, K2, K3, K4, B1, B2) im Kraftfluss zwischen der Antriebswelle (AN) und dem Steg (ST2) des zweiten Planetenradsatzes (PS2) angeordnet ist oder das dritte Schaltelement (K3) der sechs Schaltelemente (K1, K2, K3, K4, B1, B2) im Kraftfluss zwischen dem Steg (ST2) des zweiten Planetenradsatzes (PS2) und dem neunten Verbindungselement (9) angeordnet ist,

6. Lastschaltbares Mehrstufengetriebe (120) gemäß einem der Ansprüche 1 bis 5, **dadurch gekennzeichnet, dass** das achte Verbindungselement (8) ein viertes Schaltelement (K4) der sechs Schalt-elemente (K1, K2, K3, K4, B1, B2) aufweist, wobei das vierte Schaltelement (K4) im Kraftfluss zwischen dem zweiten Stirnrad (ST1b) der ersten Stirnradstufe (STS1) und der Abtriebswelle (AB) angeordnet ist.

7. Lastschaltbares Mehrstufengetriebe (120) gemäß einem der Ansprüche 1-5, **dadurch gekennzeichnet, dass** das dritte Verbindungselement (3) ein viertes Schaltelement (K4) der sechs Schaltelemente (K1, K2, K3, K4, B1, B2) aufweist, wobei das vierte Schaltelement (K4) im Kraftfluss zwischen dem gemeinsamen Verbindungspunkt von drittem, vierten und zehntem Verbindungselement (3, 4, 10) und dem ersten Stirnrad (ST1a) der ersten Stirnradstufe (STS1) angeordnet ist.

8. Lastschaltbares Mehrstufengetriebe (120) gemäß einem der vorangegangenen Ansprüche, **dadurch gekennzeichnet, dass** auf der Antriebswelle (AN) eine Leistungsquelle (EM), insbesondere ein Elektromotor (EM), angeordnet ist.

9. Lastschaltbares Mehrstufengetriebe (120) gemäß einem der vorangegangenen Ansprüche, **dadurch gekennzeichnet, dass** zumindest ein Planetenradsatz (PS1, PS2, PS3) als Minus-Planetenradsatz ausgebildet ist.

10. Lastschaltbares Mehrstufengetriebe (120) gemäß Anspruch 1, 5, einem der Ansprüche 2 bis 4 und einem der Ansprüche 6 oder 7, optional auch zusätzliche einem der Ansprüche 8 oder 9, **dadurch gekennzeichnet, dass** sich der erste Vorwärtsgang durch Schließen des zweiten, vierten und fünften Schaltelements (K2, K4, B1),
der zweite Vorwärtsgang durch Schließen des zweiten, dritten und vierten Schaltelements (K2, K3, K4),
der dritte Vorwärtsgang durch Schließen des dritten, vierten und fünften Schaltelements (K3, K4, B1),
der vierte Vorwärtsgang durch Schließen des ersten, dritten und vierten Schaltelementes (K1, K3, K4),
der fünfte Vorwärtsgang durch Schließen des ersten, dritten und fünften Schaltelements (K1, K3, B1),
der sechste Vorwärtsgang durch Schließen des ersten, zweiten und dritten Schaltelements (K1, K2, K3),
der siebte Vorwärtsgang durch Schließen des ersten, zweiten und fünften Schaltelements (K1, K2, B1),
der achte Vorwärtsgang durch Schließen des ersten, zweiten und sechsten Schaltelements (K1, K2, B2),
der neunte Vorwärtsgang durch Schließen des ersten, fünften und sechsten Schaltelements (K1, B1, B2), und
ein Rückwärtsgang durch schließen des vierten, fünften und sechsten Schaltelements (K4, B1, B2)
ergibt.

## Claims

1. Powershift-capable multi-stage gearbox (120) of planetary type of construction for arrangement between a drive-input shaft (AN) and a drive-output shaft (AB) for a vehicle (100), wherein the multi-stage gearbox has two parallel shaft strands (WS1, WS2), six switching elements (K1, K2, K3, K4, B1, B2), two spur-gear stages (STS1, STS2) and three planetary gear sets (PS1, PS2, PS3), wherein the planetary gear sets (PS1, PS2, PS3) each have a sun gear (SO1, SO2, S03), an internal gear (HO1, H02, H03) and a planet carrier, combined in a web (ST1, ST2, ST3), with multiple planet gears, wherein the two shaft strands (WS1, WS2) are connectable to one another by way of the two spur-gear stages (STS1, STS2), wherein, by selective engagement of the six switching elements (K1, K2, K3, K4, B1, B2), different transmission ratios can be realized between the drive-input shaft (AN) and the drive-output shaft (AB), such that a multiplicity of forward gears, at least nine forward gears, and at least one reverse gear can be realized,
wherein the drive-input shaft (AN) is arranged on a first shaft strand (WS1) of the two parallel shaft strands (WS1, WS2),
wherein the drive-output shaft (AB) is arranged on a second shaft strand (WS2) of the two parallel shaft strands (WS1, WS2),
a sun gear (S02) of a second planetary gear set (PS2) of the three planetary gear sets (PS1, PS2, PS3) and the drive-input shaft (AN) are connected rotationally conjointly to one another and form a first connecting element (1),
an internal gear (H02) of the second planetary gear set (PS2) and a web (ST3) of a third planetary gear set (PS3) of the three planetary gear sets (PS1, PS2, PS3) are connected to one another and form a ninth connecting element (9),
a fifth switching element (B1) of the six switching elements (K1, K2, K3, K4, B1, B2) is arranged in the power flow between a sun gear (S03) of the third planetary gear set (PS3) and a gearbox housing (GG), and
a sixth switching element (B2) of the six switching elements (K1, K2, K3, K4, B1, B2) is arranged in the power flow between a web (ST2) of the second planetary gear set (PS2) and the gearbox housing (GG),
**characterized in that**
the three planetary gear sets (PS1, PS2, PS3) are arranged on the first shaft strand (WS1),
a sun gear (SO1) of a first planetary gear set (PS1) of the three planetary gear sets (PS1, PS2, PS3), a first spur gear (ST1a) of a first spur-gear stage (STS1) of the at least two spur-gear stages (STS1, STS2) and an internal gear (H03) of the third planetary gear set (PS3) are connected to one another by way of a second, third and fourth connecting element (2, 3, 4), wherein the second, third and fourth connecting element (2, 3, 4) have a common connecting point, and the second connecting element (2) is furthermore connected to the sun gear (SO1) of the first planetary gear set (PS1), the third connecting element (3) is furthermore connected to the first spur gear (ST1a) of the first spur-gear stage (STS1), and the fourth connecting element (4) is furthermore connected to the internal gear (H03) of the first planetary gear set (PS3),
a first spur gear (ST2a) of a second spur-gear stage (STS2) of the at least two spur-gear stages (STS1, STS2) and an internal gear (HO1) of the first planetary gear set (PS1) are connected to one another and form a fifth connecting element (5),
a second spur gear (ST2b) of the second spur-gear stage (STS2) and the drive-output shaft (AB) are connected and form a sixth connecting element (6),
a web (ST1) of the first planetary gear set (PS1) and the drive-input shaft (AN) are connected to one another and form a seventh connecting element (7),
a second spur gear (ST1b) of the first spur-gear stage (STS1) and the drive-output shaft (AB) are connected to one another and form an eighth connecting element (8),
wherein
a second switching element (K2) of the six switching elements (K1, K2, K3, K4, B1, B2) is arranged in the power flow between the fourth connecting element (4) and the web (ST2) of the second planetary gear set (PS2).

2. Powershift-capable multi-stage gearbox (120) according to Claim 1, **characterized in that** the seventh connecting element (7) has a first switching element (K1) of the six switching elements (K1, K2, K3, K4, B1, B2), wherein the first switching element (K1) is arranged in the power flow between the drive-input shaft (AN) and the web (ST1) of the first planetary gear set (PS1).

3. Powershift-capable multi-stage gearbox (120) according to Claim 1, **characterized in that** the second connecting element (2) has a first switching element (K1) of the six switching elements (K1, K2, K3, K4, B1, B2), or the fifth connecting element (5) has the first switching element (K1).

4. Powershift-capable multi-stage gearbox (120) according to Claim 1, **characterized in that** the sixth connecting element (6) has a first switching element (K1) of the six switching elements (K1, K2, K3, K4, B1, B2), wherein the first switching element (K1) is arranged in the power flow between a second spur gear (ST1b) of the first spur-gear stage (STS1) and the drive-output shaft (AB).

5. Powershift-capable multi-stage gearbox (120) according to one of Claims 1 to 4, **characterized in that** a third switching element (K3) of the six switching elements (K1, K2, K3, K4, B1, B2) is arranged in the power flow between the drive-input shaft (AN) and the web (ST2) of the second planetary gear set (PS2), or the third switching element (K3) of the six switching elements (K1, K2, K3, K4, B1, B2) is arranged in the power flow between the web (ST2) of the second planetary gear set (PS2) and the ninth connecting element (9).

6. Powershift-capable multi-stage gearbox (120) according to one of Claims 1 to 5, **characterized in that** the eighth connecting element (8) has a fourth switching element (K4) of the six switching elements (K1, K2, K3, K4, B1, B2), wherein the fourth switching element (K4) is arranged in the power flow between the second spur gear (ST1b) of the first spur-gear stage (STS1) and the drive-output shaft (AB).

7. Powershift-capable multi-stage gearbox (120) according to one of Claims 1 to 5, **characterized in that** the third connecting element (3) has a fourth switching element (K4) of the six switching elements (K1, K2, K3, K4, B1, B2), wherein the fourth switching element (K4) is arranged in the power flow between the common connecting point of third, fourth and tenth connecting element (3, 4, 10) and the first spur gear (ST1a) of the first spur-gear stage (STS1).

8. Powershift-capable multi-stage gearbox (120) according to one of the preceding claims, **characterized in that** that a power source (EM), in particular an electric motor (EM), is arranged on the drive-input shaft (AN).

9. Powershift-capable multi-stage gearbox (120) according to one of the preceding claims, **characterized in that** at least one planetary gear set (PS1, PS2, PS3) is in designed as a minus planetary gear set.

10. Powershift-capable multi-stage gearbox (120) according to Claim 1, 5, one of Claims 2 to 4 and either of Claims 6 and 7, optionally also additionally either of Claims 8 and 9, **characterized in that**
the first forward gear is realized by closing the third, fourth and sixth switching elements (K3, K4, B2),
the second forward gear is realized by closing the second, third and fourth switching elements (K2, K3, K4),
the third forward gear is realized by closing the second, fourth and sixth switching elements (K2, K4, B2),
the fourth forward gear is realized by closing the first, second and fourth switching elements (K1, K2, K4),
the fifth forward gear is realized by closing the first, second and sixth switching elements (K1, K2, B2),
the sixth forward gear is realized by closing the first, second and third switching elements (K1, K2, K3),
the seventh forward gear is realized by closing the first, third and sixth switching elements (K1, K3, B2),
the eighth forward gear is realized by closing the first, third and fifth switching elements (K1, K3, B1),
the ninth forward gear is realized by closing the first, fifth and sixth switching elements (K1, B1, B2), and
a reverse gear is realized by closing the fourth, fifth and sixth switching elements (K4, B1, B2).

## Revendications

1. Transmission (120) à planétaires commutable entre plusieurs rapports de transmission et destinée à être disposée entre un arbre d'entraînement (AN) et un arbre entraîné (AB) d'un véhicule (100), la transmission à plusieurs rapports présentant
deux trains d'arbres parallèles (WS1, WS2),
six éléments (K1, K2, K3, K4, B1, B2) de changement de rapport de transmission,
deux étages de pignons droits (STS1, STS2) et trois jeux (PS1, PS2, PS3) de roues planétaires, les jeux (PS1, PS2, PS3) de roues planétaires présentant chacun une roue solaire (SO1, SO2, SO3), une roue creuse (HO1, H02, H03) et un porte-planétaires présentant plusieurs roues planétaires et assemblé de manière à former un porte-satellites (ST1, ST2, ST3),
les deux trains d'arbres (WS1, WS2) pouvant être reliés l'un à l'autre par l'intermédiaire des étages (STS1, STS2) de pignons droits,
un engagement sélectif des six éléments (K1, K2, K3, K4, B1, B2) de changement de rapport de transmission permettant d'obtenir différents rapports de transmission entre l'arbre d'entraînement (AN) et l'arbre entraîné (AB) de manière à pouvoir réaliser plusieurs rapports de transmission avant, au moins neuf rapports de transmission avant et au moins un rapport de transmission arrière,
l'arbre d'entraînement (AN) étant disposé sur un premier train d'arbres (WS1) des deux trains d'arbres (WS1, WS2) parallèles,
l'arbre entraîné (AB) étant disposé sur un deuxième train d'arbres (WS2) des deux trains d'arbres parallèles (WS1, WS2),
une roue solaire (SO2) d'un deuxième jeu (PS2) de roues planétaires des trois jeux (PS1, PS2, PS3) de roues planétaires et l'arbre d'entraînement (AN) étant reliés à rotation solidaire et formant un premier élément de liaison (1),
une roue creuse (H02) du deuxième jeu (PS2) de roues planétaires et un porte-satellites (ST3) d'un troisième jeu (PS3) de roues planétaires des trois jeux (PS1, PS2, PS3) de roues planétaires étant reliés l'un à l'autre et formant un neuvième élément de liaison (9),
un cinquième élément (B1) de changement de rapport de transmission des six éléments (K1, K2, K3, K4, B1, B2) de changement de rapport de transmission étant disposé dans la ligne de transmission de force formée entre une roue solaire (SO3) du troisième jeu (PS3) de roues planétaires et le carter (GG) de la transmission et
un sixième élément (B2) de changement de rapport de transmission d'éléments (K1, K2, K3, K4, B1, B2) de changement de rapport de transmission étant disposé dans la ligne de transmission de force formée entre un porte-satellites (ST2) du deuxième jeu (PS2) de roues planétaires et le carter (GG) de la transmission, **caractérisée en ce que**
les trois jeux (PS1, PS2, PS3) de roues planétaires sont disposés sur le premier train d'arbres (WS1),
**en ce qu'**une roue solaire (SO1) d'un premier jeu (PS1) de roues planétaires des trois jeux (PS1, PS2, PS3) de roues planétaires, un premier pignon droit (ST1a) d'un premier étage (STS1) de pignons droits des deux ou plusieurs étages (STS1, STS2) de pignons droits et une roue creuse (H03) du troisième jeu (PS3) de roues planétaires sont reliés les uns aux autres par l'intermédiaire d'un deuxième, d'un troisième et d'un quatrième élément de liaison (2, 3, 4),
**en ce que** le deuxième, le troisième et le quatrième élément de liaison (2, 3, 4) présentent un point de liaison commun et le deuxième élément de liaison (2) étant en outre relié à la roue solaire (SO1) du premier jeu (PS1) de roues planétaires,
**en ce que** le troisième élément de liaison (3) est en outre relié à la première roue solaire (ST1a) du premier étage (STS1) de roues solaires et le quatrième élément de liaison (4) est en outre relié à la roue creuse (H03) du troisième jeu (PS3) de roues planétaires,
**en ce qu'**un premier pignon droit (ST2a) d'un deuxième étage (STS2) de pignons droits des deux ou plusieurs étages (STS1, STS2) de pignons droits et une roue creuse (HO1) du premier jeu (PS1) de roues planétaires sont reliés l'un à l'autre et forment un cinquième élément de liaison (5),
**en ce qu'**un deuxième pignon droit (ST2b) du deuxième étage (STS2) de pignons droits et l'arbre entraîné (AB) sont reliés l'un à l'autre et forment un sixième élément de liaison (6),
**en ce qu'**un porte-satellite (ST1) du premier jeu (PS1) de roues planétaires et l'arbre d'entraînement (AN) sont reliés l'un à l'autre et forment un septième élément de liaison (7),
**en ce qu'**un deuxième pignon droit (ST1b) du premier étage (STS1) de pignons droits et l'arbre entraîné (AB) sont reliés l'un à l'autre et forment un huitième élément de liaison (8) et
**en ce qu'**un deuxième élément (K2) de changement de rapport de transmission des six éléments (K1, K2, K3, K4, B1, B2) de changement de rapport de transmission est disposé dans la ligne de transmission de force formée entre le quatrième élément de liaison (4) et le porte-satellite (ST2) du deuxième jeu (PS2) de roues planétaires.

2. Transmission (120) à planétaires commutable entre plusieurs rapports de transmission selon la revendication 1, **caractérisée en ce que** le septième élément de liaison (7) présente un premier élément (K1) de changement de rapport de transmission des six éléments (K1, K2, K3, K4, B1, B2) de changement de rapport de transmission, le premier élément (K1) de changement de rapport de transmission étant disposé dans la ligne de transmission de force formée entre l'arbre d'entraînement (AN) et le porte-satellites (ST1) du premier jeu (PS1) de roues planétaires.

3. Transmission (120) à planétaires commutable entre plusieurs rapports de transmission selon la revendication 1, **caractérisée en ce que** le deuxième élément de liaison (2) présente un premier élément (K1) de changement de rapport de transmission des six éléments (K1, K2, K3, K4, B1, B2) de changement de rapport de transmission ou **en ce que** le cinquième élément de liaison (5) présente le premier élément (K1) de changement de rapport de transmission.

4. Transmission (120) à planétaires commutable entre plusieurs rapports de transmission selon la revendication 1, **caractérisée en ce que** le sixième élément de liaison (6) présente un premier élément (K1) de changement de rapport de transmission des six éléments (K1, K2, K3, K4, B1, B2) de changement de rapport de transmission, le premier élément (K1) de changement de rapport de transmission étant disposé dans la ligne de transmission de force formée entre un deuxième pignon droit (ST1b) du premier étage (STS1) de pignons droits et l'arbre entraîné (AB).

5. Transmission (120) à planétaires commutable entre plusieurs rapports de transmission selon l'une des revendications 1 à 4, **caractérisée en ce qu'**un troisième élément (K3) de changement de rapport de transmission des six éléments (K1, K2, K3, K4, B1, B2) de changement de rapport de transmission est disposé dans la ligne de transmission de force formée entre l'arbre d'entraînement (AN) et le porte-satellites (ST2) du deuxième jeu (PS2) de roues planétaires ou **en ce que** le troisième élément (K3) de changement de rapport de transmission des six éléments (K1, K2, K3, K4, B1, B2) de changement de rapport de transmission est disposé dans la ligne de transmission de force formée entre le porte-satellites (ST2) du deuxième jeu (PS2) de roues planétaires et le neuvième élément de liaison (9).

6. Transmission (120) à planétaires commutable entre plusieurs rapports de transmission selon l'une des revendications 1 à 5, **caractérisée en ce que** le huitième élément de liaison (8) présente un quatrième élément (K4) de changement de rapport de transmission des six éléments (K1, K2, K3, K4, B1, B2) de changement de rapport de transmission, le quatrième élément (K4) de changement de rapport de transmission étant disposé dans la ligne de transmission de force formée entre le deuxième pignon droit (ST1b) du premier étage (STS1) de pignons droits et l'arbre entraîné (AB).

7. Transmission (120) à planétaires commutable entre plusieurs rapports de transmission selon l'une des revendications 1 à 5, **caractérisée en ce que** le troisième élément de liaison (3) présente un quatrième élément (K4) de changement de rapport de transmission des six éléments (K1, K2, K3, K4, B1, B2) de changement de rapport de transmission, le quatrième élément (K4) de changement de rapport de transmission étant disposé dans la ligne de transmission de force formée entre le point de liaison commun du troisième, du quatrième et du dixième élément de liaison (3, 4, 10) et le premier pignon droit (ST1a) du premier étage (STS1) de pignons droits.

8. Transmission (120) à planétaires commutable entre plusieurs rapports de transmission selon l'une des revendications précédentes, **caractérisée en ce qu'**une source de puissance (EM), en particulier un moteur électrique (EM), est disposée sur l'arbre d'entraînement (AN).

9. Transmission (120) à planétaires commutable entre plusieurs rapports de transmission selon l'une des revendications précédentes, **caractérisée en ce qu'**au moins un jeu (PS1, PS2, PS3) de roues planétaires est configuré comme jeu négatif de roues planétaires.

10. Transmission (120) à planétaires commutable entre plusieurs rapports de transmission selon les revendications 1, 5, l'une des revendications 2 à 4 et l'une des revendications 6 ou 7, et facultativement aussi selon l'une des revendications 8 ou 9, **caractérisée en ce que**
le premier rapport avant est obtenu par fermeture du troisième, du quatrième et du sixième élément (K3, K4, B2) de changement de rapport de transmission,
le deuxième rapport avant est obtenu par fermeture du deuxième, du troisième et du quatrième élément (K2, K3, K4) de changement de rapport de transmission,
le troisième rapport avant est obtenu par fermeture du deuxième, du quatrième et du sixième élément (K2, K4, B2) de changement de rapport de transmission,
le quatrième rapport avant est obtenu par fermeture du premier, du deuxième et du quatrième élément (K1, K2, K4) de changement de rapport de transmission,
le cinquième rapport avant est obtenu par fermeture du premier, du deuxième et du sixième élément (K1, K2, B2) de changement de rapport de transmission,
le sixième rapport avant est obtenu par fermeture du premier, du deuxième et du troisième élément (K1, K2, K3) de changement de rapport de transmission,
le septième rapport avant est obtenu par fermeture du premier, du troisième et du sixième élément (K1, K3, B2) de changement de rapport de transmission,
le huitième rapport avant est obtenu par fermeture du premier, du troisième et du cinquième élément (K1, K3, B1) de changement de rapport de transmission,
le neuvième rapport avant est obtenu par fermeture du premier, du cinquième et du sixième élément (K1, B1, B2) de changement de rapport de transmission et
un rapport arrière est obtenu par fermeture du quatrième, du cinquième et du sixième élément (K4, B1, B2) de changement de rapport de transmission.
